# EUROPEAN PATENT SPECIFICATION

(11) **EP 3 568 586 B1**
(45) Date of publication and mention of the grant of the patent: **17.07.2024**
(21) Application number: 18707942.1
(22) Date of filing: 07.03.2018
(51) Int. Cl.: F03D 1/00, F03D 80/00, F03D 80/30, F16B 5/02, F16B 37/06

(54) **NACELLE COMPRISING MULTIFUNCTIONAL COMPONENTS**
GONDEL MIT MULTIFUNKTIONALEN KOMPONENTEN
NACELLE COMPORTANT DES COMPOSANTS MULTIFONCTIONNELS

(30) Priority: 07.03.2017 EP 17159675
(43) Date of publication of application: 20.11.2019
(73) Proprietor: Siemens Gamesa Renewable Energy Deutschland GmbH, 27572 Bremerhaven (DE)
(72) Inventor: TAUBENRAUCH, Elmar, 27639 Wurster Nordseeküste (DE); AVNER, Dror, 10829 Berlin (DE)
(74) Representative: SGRE-Association
(86) International application number: PCT/EP2018/055660
(87) International publication number: WO 2018/162588

(56) References cited:
- EP-A1- 2 218 911
- EP-A1- 2 636 898
- EP-A1- 2 829 726
- EP-A1- 2 942 522
- EP-A1- 2 949 986
- EP-A2- 2 322 795
- EP-A2- 2 466 129
- WO-A2-2007/132408
- WO-A2-2009/132671
- GB-A- 1 158 907
- JP-A- 2012 122 406
- US-A1- 2012 045 321
- US-A1- 2012 163 990
- US-A1- 2013 142 664
- US-A1- 2015 152 881
- US-A1- 2015 258 741

## Description

### Field

The invention relates to a nacelle for a wind driven power plant.

### Background

Wind is one of the most important renewable energy technologies. Wind turbines (synonymously also referred to as wind driven power plants, wind turbine generators, or wind energy converters) are more and more arranged in large- scale offshore wind parks. There are many technical challenges relating to these offshore wind parks, as for example the assembly of parts and the transport, the erection of the wind turbine in the sea and the maintenance of the wind driven power plants.

WO 2009/132671 A2 discloses a wind energy installation having a nacelle with a paneling. The paneling is configured with a hatch opening that is arranged in the paneling covering surface. The hatch opening is sufficiently large in dimension to allow components to be removed or introduced in an upward direction from the top into the nacelle over the whole area of the drive train of the wind energy installation. The hatch opening can be opened and closed by a hatch cover that is configured to be slid as a whole along the top of the nacelle. Furthermore, a helicopter hoisting platform is provided on top of the nacelle and the cover is configured to slide below the hoisting platform in order to open the hatch.

US 2012/0163990 A1 discloses a composite material panel structure for a nacelle cover of a wind turbine. An anti-lightning function can be realized with the composite material panel structure without adding a separate anti-lightning structure to the panel structure of the nacelle.

JP 2012 122406 A discloses a nacelle cover for a wind turbine. The nacelle cover comprises cover panels and connecting members to connect the cover panels to each other. The cover panels are joined with a predetermined clearance between their end parts. The connecting member is fixed watertight from the inside of the nacelle cover to close the clearance

EP 2 218 911 A1 discloses a housing for a nacelle of a wind turbine. The housing comprises housing shells made of a composite plastic material. A connection assembly is configured to connect the housing shells and includes connection profiles. An adhesive layer extends between the profiles for connecting the housing shells.

EP 2 322 795 A2 discloses a nacelle for a wind turbine comprising a plurality of walls. A support beam is disposed at an inner surface of a connecting area of contiguous walls. The shape of a support beam portion is adapted to the inner surface of the connecting area.

Regarding further prior art, it is referred to the documents US 2013/142664 A1, US 2012/045321 A1, EP 2 636 898 A1, US 2015/258741 A1, and WO 2007/132408 A2.

### Summary

It is an object of the invention to provide an improved nacelle of a wind driven power plant.

The nacelle of an (offshore) wind turbine is one of the largest components after the tower and the blades. The nacelle is a complex assembly that supports, covers and protects the internal components. The improved nacelle also provides for reduced costs of produced energy (COE).

According to an aspect, an improved nacelle for a wind driven power plant is provided. The nacelle can comprise at least one out of a multifunctional nacelle cover, a multifunctional support frame, and a multifunctional helicopter hoisting platform. The multifunctional nacelle cover can comprise at least one out of
i. a multifunctional flange concept,
ii. a multifunctional nacelle roof, and
iii. a multifunctional nacelle bottom cover.

The above features generally support improved process traceability, tight tolerances, efficient pre-moulding, efficient manufacturing and process atomization, as well as integrated design, high grade materials, fewer parts, symmetry and repeatability.

The nacelle cover comprises a plurality of panels made of a composite. The panels may form substantially the entire cover (housing) of the nacelle. The panels comprise flanges, and the flanges can be connected via flange connections. The flange connections can be located substantially along all the flanges of the composite panels of the nacelle cover. The flange connections can be configured according to a multifunctional flange concept.

The flange connections can all be of a planar (or flat) connection type. This aspect provides that the panels of the nacelle cover can be manufactured in a one-shot lamination process with very few additional manufacturing steps and acceptable tolerances.

There are provided different types of flange connections. According to the invention, a first type of flange connection is used for the nacelle lateral walls (side walls and rear wall and maybe front face). According to the invention, a second type of flange connection is used for the nacelle roof. A third type of flange connection may be used for the nacelle bottom. A fourth type of flange connection maybe used for a nacelle hatch cover.

The different types (one to fourth) may differ in at least one configuration or component. However, all the four types are advantageously configured as planar (flat) flange connections.

At least some if not all of the flange type connections may have in common that at least one metal bar is provided that extends along substantially the full length of the flange connection.

The multifunctional flange concept can comprise metal bars arranged adjacent to the flanges of the flange connections. The metal bars can be configured to i) reinforce the flange connection, and ii) provide a Faraday cage surrounding internal components of the nacelle, such that the internal components are protected from lightning.

Alternatively or additionally, the flange connections can be planar flange connections, and the planar flange connections can be configured in an overlapping high-point drainage arrangement. This can assist in reinforcing the flange connection, and preventing ingress of water into the nacelle.

According to the invention, the first type of flange connection differs from the second type in that the first type comprises rivet nuts and the second type comprises clinch bolts.

The second type of flange connection is used in locations on the roof of the nacelle, i.e. in a greater altitude than the first type of flange connection.

In an embodiment, there may be a third type of flange connections. The third type of flange connection may be located in the bottom area (for bottom panels) of the nacelle cover. The third type may be different from the first type. The third type may, for example comprise a drip edge. The third type may also differ from the second type by the drip edge. The third type may also differ from the first and/or second type in that it is located in an indentation (recessed) with respect to the surrounding and connected panels. In other words, the third type of flange connection has greater altitude than the surface of the surrounding panels outside the flange connection.

According to an aspect, an improved nacelle for a wind turbine is provided. The nacelle comprises a support frame and a nacelle cover coupled to the support frame. The nacelle cover comprises a self-supported nacelle roof comprising a plurality of panels made of a composite. The panels are connected to each other by means of connection flanges integral to the panels. The self- supported nacelle roof extends, while being unsupported by the support frame, at least in a center section on the self supported roof from a first lateral side of the nacelle to a second lateral side of the nacelle. The self-supported nacelle roof can also extend, while being unsupported by the support frame, at least in a center section on the self supported roof from a front to a rear side of the nacelle, i.e. over more than half the longitudinal length and in particular over more than 70% or substantially over the entire longitudinal length of the nacelle.

In the context of this description the following three dimensions in form of a Cartesian coordinate system are used. The nacelle extends in a vertical direction (substantially parallel to the axial extension of a tower on which the nacelle can be mounted), and in a horizontal plane defined by a longitudinal direction substantially parallel to a drive train to be located in the nacelle (it should be considered though, that the drive train can be slightly vertically inclined by approximately 5°) and a transversal direction. The longitudinal direction and the transversal direction are both perpendicular to the vertical direction and to each other. In other words, the three dimensions to describe the nacelle are vertical, longitudinal and transversal.

The nacelle comprises a support frame. The support frame can comprise a framework of beams (truss members). The beams can be metallic beams. In particular, the beams can be steel beams comprising a steel alloy and/or aluminum beams comprising an aluminum alloy. The support frame can comprise - among others - a first upper lateral longitudinal beam at a first lateral side of the nacelle and a second upper lateral longitudinal beam at a second lateral side of the nacelle being opposite to the first lateral side.

The support frame can comprise a lower/inner portion (which is referred to as machine frame or inner support frame) and a surrounding/outer portion (which is referred to as outer support frame) in the perimeter of the support frame. The support frame, and in particular the inner support frame can be connected to the main frame of the wind turbine. In other words, the framework structure of the support frame can be arranged along a perimeter of the machine frame. The framework structure can be connected to the machine frame. The framework structure can extend from the machine frame along the vertical direction. The first and the second upper lateral longitudinal beams can terminate lateral sections of the framework structure in the vertical direction at an upper end. Stated differently, the first and the second upper lateral longitudinal beams are arranged on top of the lateral sections of the framework structure, i.e. the first and second upper lateral longitudinal beams are part of the outer support frame.

A (central) top section of the framework structure of the support frame can be free of beams, truss members or the like to provide an upper access opening or an upper passageway for insertion, removal and replacement of components.

There may be no further transversal or longitudinal beams between the first and second upper lateral longitudinal beams within the upper access opening/upper passageway. Stated differently, the inner support frame does not project over the installation space of the drive train. The framework structure can be free from intermediate transversal and longitudinal beams or truss members above the drive train. For example, a main shaft assembly, the gear box, and/or the generator can then be inserted into the nacelle or be removed from the nacelle via the upper passageway in the top section of the framework structure of the support frame. Advantageously, the whole drive train comprising the main shaft assembly, the gearbox and the generator can be lowered into the nacelle and/or lifted from the nacelle through the upper access opening or upper passageway in the top section of the framework structure.

A bottom section of the framework structure, i.e. the machine frame / inner support frame can comprise a lower access opening or lower passageway for lowering down or winching up components such as the generator, the main shaft assembly, the gearbox or other parts. All this provides for a substantial weight and cost reduction. Advantageously, the support frame without intermediate transversal or longitudinal cross beams provides an access opening and space for a service crane that is configured to roll on the first and second upper lateral longitudinal beams, providing internal lifting capacity for regular maintenance work.

According to another aspect, the nacelle comprises a nacelle cover. The nacelle cover protects the drive train and other internal components of the wind power installation from the harsh environmental conditions (in particular humid and salty air in case of offshore installation sites) the wind turbine is exposed to.

The nacelle cover can be coupled (attached) to the support frame. In particular, the nacelle cover can be (indirectly) coupled (via brackets) to beams of the outer support frame.

The nacelle cover can comprise lateral nacelle side walls, a nacelle front face, a nacelle rear wall, a nacelle bottom cover, and a nacelle roof. The term "front face" is used instead of the term "front wall" to emphasize that a central portion of the front side of the nacelle is open to provide a passage for the main shaft. The open central portion of the front side of the nacelle is covered by the rotor/spinner of the wind turbine. The walls (and the surrounding portion of the front face) advantageously can be composed of panels of a composite material. Stated differently, the nacelle cover comprises and/or consists of a plurality of panels of a composite material.

According to an advantageous aspect, the lateral side walls or side panels of the nacelle can be coupled to the (outer) support frame. The nacelle front face or front panels and/or the nacelle rear wall or rear panels can also be coupled to the (outer) support frame. Also, the nacelle bottom cover or bottom panels and/or some of the nacelle roof panels can be coupled to the (outer) support frame. Advantageously, however, only the lateral side walls (panels), the bottom cover (panels) of the nacelle and optionally the nacelle roof (panels) along an outer circumferential rim of the nacelle roof may be coupled to the (outer) support frame. Stated differently, the nacelle cover can be laterally supported by the outer support frame and the nacelle roof may comprise a center section which is only supported by other panels of the nacelle cover.

In other words, the nacelle roof can be self-supported. According to this aspect, the nacelle roof or at least a center section of the nacelle roof is not supported by the support frame. Advantageously, the nacelle roof can be supported by the nacelle side panels, rear panels and/or the nacelle front panels.

Stated differently, the self-supported nacelle roof may be supported in a lateral region of the nacelle, and in the rear and/or front region of the nacelle.

The nacelle roof may (only) be supported along an outer circumference (rim), without intermediate bearings in an area between the first and the second upper lateral longitudinal beams of the (outer) support frame. The self-supported nacelle roof can extend, while being unsupported by the support frame, between the first upper lateral longitudinal beam and the second upper lateral longitudinal beam. The first and second upper lateral longitudinal beams may not be directly coupled (by brackets etc) to at least a center (central) section of the nacelle roof. This aspect provides for an integrated design with fewer parts requiring reduced assembly efforts. The self-supporting structure of the nacelle cover further reduces the weight and complexity of the support frame even further.

The panels of the nacelle cover are advantageously made of a composite, in particular a fiber reinforced polymer. The fiber reinforced polymer can be a glass fiber reinforced polymer (GFRP). A glass fiber reinforced polymer, also known as "Fiberglass" or "fiberglass" is a type of fiber-reinforced plastic where the reinforcement fiber is specifically glass fiber. The fibers may be randomly arranged and flattened into a sheet (called a chopped strand mat), or woven into a fabric. Alternatively, the fibers of a layer of the composite may be unidirectionally aligned. The polymer matrix may be a thermoset polymer matrix, most often based on thermosetting polymers such as epoxy, polyester resin, or vinylester, or a thermoplastic. Glass fibers are made of various types of glass depending upon the fiberglass use. These glasses all contain silica or silicate, with varying amounts of oxides of calcium, magnesium, and sometimes boron. Other common names for fiberglass are glass-reinforced plastic (GRP), glass- fiber reinforced plastic (GFRP) or GFK (from German: Glasfaserverstärkter Kunststoff). Since glass fiber itself is sometimes referred to as "fiberglass", the composite is also called "fiberglass reinforced plastic." The present description also uses the term "composite" for GFRP or GRP.

The panels can be connected to each other by means of overlapping flanges, which are integral to the panels. The flanges advantageously extend in the same plane as the panel to which it belongs. Flanges of curved panels may accordingly extend in a direction substantially tangential to the curve, i.e. continue in the direction of (overall) extension in the region of the panel adjacent to the flange. In other words, the respective flange extends straightly (not bent or curved) from the panel.

Split lines (of the flange connections) between at least some, or a majority of the panels of the nacelle cover can extend in flat planes perpendicular to the surface of the panels. Advantageously, the flat planes of crossing split lines can be perpendicular to each other. The flat planes of parallel split lines can be parallel. In particular, the split lines between the lateral panels (on the lateral side of the nacelle cover) can be substantially straight in a top view on the respective side and either extend in parallel to each other or extend perpendicular to each other. There can, for example be at least three parallel horizontal split lines within one lateral side of the nacelle cover which extend in horizontal flat planes and the horizontal flat planes are parallel to each other. There can further be at least two or three vertical split lines which extend in vertical flat planes and the vertical flat planes are parallel to each other. The vertical flat planes and the horizontal flat planes are perpendicular to each other.

Advantageously, the arrangement of the flanges (and the panels) can be based on a high-point drainage concept. Accordingly, the flange of a higher panel overlaps the flange of a lower complementary panel of a flange connection on an outer side of the nacelle cover in a downward direction. This aspect exploits gravitational forces such that a water flow (e.g. caused by rain) is directed away from the split line (of the flange connection).

Advantageously, the flange connection can comprise reinforcing angular ("L"-shaped) beams or similar profiled metal bars, which can be arranged along the flanges, thereby becoming a part of the flange connection. The reinforced flange connection allows for a simple and robust construction of the nacelle cover.

According to another advantageous aspect, the nacelle cover comprises at least two different flange connections, dependent on the fitting conditions and whether the flange connections are designed to be detachable flange connections or permanent flange connections. A first flange connection may comprise a rivet/clinch nut and a bolt. A second flange connection may comprise a clinch bolt and a normal nut. A first flange connection may comprise two metal bars on opposite sides of the flanges. A second flange connection may comprise only one metal bar on one side of the flange connection.

At least one of the panels of a flange connection may comprise a drip edge adjacent to the flange connection.

At least one of the flange connections may be located in an indentation with respect to a surrounding surface of the adjacent panels. This kind of flange connection may advantageously be used at the bottom of a nacelle. The flange connection does then have greater altitude (level, height) than the surrounding panels which improves water tightness.

The metal bars of the flanges can (collectively) be arranged and conductively interconnected such that they form a Faraday cage to provide a lightning protection of the drive train and other components.

The flange connections may be configured to constitute a substantially maintenance free connection, having an expected/calculated lifetime of approximately twenty-five years. The configuration of the flange connections and their location and orientation around the nacelle cover as well as the configuration of the panels provides that the nacelle cover is more/better self-supporting, i.e. requires less connection points (brackets) to the support frame than prior art solutions. According to another advantageous aspect, at least one panel may comprise a sandwich structure having a foam core.

Further, at least one panel of the self-supported nacelle roof can be reinforced by at least one rib. Advantageously, the rib can be an integral part of the panel. There may be a plurality of ribs located in the panels of the nacelle roof. The panels comprising the ribs may be formed in a sandwich construction comprising a core of foam. Advantageously, the nacelle roof can thereby be configured to sustain snow loads (highest load on the roof), live loads load (e.g. from maintenance work) and fall arrest loads.

A majority of the connection flanges between adjacent panels of a center section of the self-supported roof can extend in the transversal direction. According to this aspect, it has been found out that it is more advantageous to arrange the panels such that they extend from lateral side to lateral side and are shorter in longitudinal direction than in transversal direction rather than being longer in longitudinal direction than in transversal direction. This provides improved stability and allows reducing the number of ribs or even allows the ribs to be totally avoided.

In other words: One or more panels of the roof of the nacelle can be configured to extend from one lateral side to the other lateral side of the nacelle. The length of the panel(s) in the transversal direction may then be greater than the width of the panel(s) in longitudinal direction. This configuration can advantageously apply at least to a first plurality of inner roof panels close to the hub of the nacelle (panels in the front section of the roof of the nacelle). This provides improved stability and allows reducing the number of ribs or even allows the ribs to be totally avoided.

However, alternatively, the first plurality of inner roof panels can extend in the longitudinal direction and the first plurality can be located closer to the hub of the nacelle than to the rear of the nacelle.

A second plurality of inner roof panels, for example in an area closer to the rear end of the nacelle, can be configured to extend from one lateral side to the other lateral side of the nacelle. The length of the panel(s) in the transversal direction may then be greater than the width of the panel(s) in longitudinal direction.

According to another advantageous aspect, a number of the panels of the self-supported roof can be equal to or greater than four, equal to or greater than five or equal to or greater than six and/or the number of panels can be four, five, six, seven, eight, nine or ten. Advantageously, the number of panels can be lower than thirty, in particular lower than twenty, more particularly lower than fifteen.

Advantageously, the panels are configured to comprise an enveloping cuboid that fits into standardized freight containers.

According to another advantageous aspect, the center of the self-supported nacelle roof can be designed as a large removable and detachable hatch for extensive service operations. This aspect can provide free and easy access for partly or complete drive train replacement.

According to another advantageous aspect, the nacelle cover, (in particular the side panels of the nacelle cover) can be mounted to the beams of the support frame by (adjustable) brackets. This adjustability can account for fabrication tolerances.

According to another advantageous aspect, the nacelle roof can be configured to be (at least partly) removable and detachable such that parts of or the complete drive train can be lifted upwardly and outside the nacelle when the nacelle roof or parts of the nacelle roof are removed. Stated differently, center roof sections of the nacelle roof can be designed as a sealed removable lid. For extensive service operations the center roof sections can be removed. Advantageously, the center roof sections can be removed individually or as a group to provide a variety of opening sizes. This aspect enables the extraction of large internal components in relatively quick maneuvers, as only the center roof sections have to be removed to provide a big opening.

Some of the sections can be configured as hinged access hatch cover. The hinged access hatch cover(s) can be configured to open (revolve) about 90° or more. For example, the hatch covers can also be configured to revolve about approximately 180°, such that the hatch covers lie flat against the surrounding surface. In other words, the hatch covers can revolve about a value of approximately 90° to 180°, for example approximately 120°.

According to another advantageous aspect, the nacelle can comprise a crane mounted on a trolley. The trolley can be configured to roll on the first and second upper longitudinal lateral beams along the entire nacelle internals, in particular the entire drive train. This aspect allows for higher and wider coverage with internal crane service.

Advantageously the trolley can be locked in a parking position, if the entire drive train or parts of the drive train are lifted.

A nacelle cover (envelope, housing) of the nacelle comprises a plurality of panels made of a composite. The panels are connected to each other by means of connection flanges. The panels are configurable to provide openings of different sizes to the nacelle by detaching and removing one or more inner roof panels.

This aspect provides an improved accessibility of the inside of nacelle, in particular for maintenance work, i.e. repair and replacement operations.

The composite can be a fiber reinforced polymer. The fiber reinforced polymer can be a glass fiber reinforced polymer (GFRP). A glass fiber reinforced polymer, also known as "Fiberglass" or "fiberglass" is a type of fiber-reinforced plastic where the reinforcement fiber is specifically glass fiber. The glass fiber may be randomly arranged, flattened into a sheet (called a chopped strand mat), or woven into a fabric. The polymer matrix may be a thermoset polymer matrix, most often based on thermosetting polymers such as epoxy, polyester resin, or vinylester, or a thermoplastic. The glass fibers are made of various types of glass depending upon the fiberglass use. These glasses all contain silica or silicate, with varying amounts of oxides of calcium, magnesium, and sometimes boron. Other common names for fiberglass are glass-reinforced plastic (GRP), glass- fiber reinforced plastic (GFRP) or GFK (from German: Glasfaserverstärkter Kunststoff). Because glass fiber itself is sometimes referred to as "fiberglass", the composite is also called "fiberglass reinforced plastic." The present description also uses the term "composite" for GFRP or GRP.

This aspect reduces the overall weight of the nacelle.

The nacelle can comprise a support frame. The nacelle cover can be coupled to the support frame, particularly in lateral regions of the nacelle. The nacelle roof can be self-supported. This means that the self-supported nacelle roof extends, while being unsupported by the support frame, at least in a center section on the roof (comprising the inner roof panels) from a first lateral side of the nacelle to a second lateral side of the nacelle.

The construction of the nacelle having an support frame and a self-supporting nacelle cover (envelope) provides for a substantial weight and cost reduction.

The nacelle cover protects the drive train and other internal components of the wind driven power plant from harsh environmental conditions and in particularly moisture.

According to an advantageous aspect, the inner roof panels can be configurable to provide a first opening having a first size (and shape) suitable for inserting/removing a complete drive train of the wind driven power plant and a second opening having a second size suitable for inserting/removing a generator of the wind driven power plant.

A predefined first plurality of inner roof panels can be configured to be detached from remaining parts of the nacelle roof to provide the first opening.

A predefined second plurality of inner roof panels can be configured to be detached from remaining parts of the nacelle roof to provide the second opening. The second plurality can be arranged in a rear region of the nacelle roof.

This aspect reduces the size of the opening (and accordingly the necessary effort to remove the opening cover) if a smaller component, such as the generator, has to be removed from or inserted into the nacelle.

According to another advantageous aspect, the first plurality of inner roof panels can comprise the second plurality of inner roof panels. This aspect reduces the number of parts and simplifies the mechanical construction of the support frame and the nacelle roof.

According to another advantageous aspect, an outer rear roof panel can comprise an access hatch configured for maintenance personnel to enter/exit the nacelle through the access hatch. The location and configuration of the access hatch simplifies the construction of the support frame and provides an easy and comfortable access.

According to another advantageous aspect, an inner roof panel can comprise a supply hatch that is configured for lifting in and/or hauling out supplies and tools for maintenance and installation work. This aspect abandons the need to remove parts of the nacelle roof in order to lift smaller parts from/into the nacelle.

According to another advantageous aspect, inner roof panels can comprise or form lifting hatches that are configured for providing a passageway for lifting gear to be connected to an inner support frame of the nacelle.

The lifting of the complete nacelle and rotor assembly is one of the most challenging operations. The lifting tool has to meet the center of gravity (COG) of the lifted load in several lifting configurations. The lifting hatches are configured to allow the accurate space for the lifting slings, prefect alignment with the COG and the trunnions provided on the nacelle main frame. Accurate lifting hatches size and position is essential for efficient lifting, it is an advantage when the hatches are calculated to the minimum opening size necessary in order to maintain the load bearing capacity of the roof. Optimized lifting hatch size is also an advantage as it avoids complicated opening mechanism with actuators and dependency on power supply. This results in faster and cost effective implementation.

According to another advantageous aspect, an outer rear roof panel and/or outer lateral roof panels and/or inner roof panels comprise platform supports for supporting a helicopter hoisting platform. The separate manufacture of the helicopter hoisting platform in combination with a self-supported roof has been shown to provide several advantages, i.e. reduced weight, better reparability, and improved characteristics in helicopter downwash.

According to another advantageous aspect, lifting eyes can be arranged in a (mostly circumferential) region adjacent to the connection flanges of the respective opening covers. Anchor points can be arranged in a central region of the respective opening covers. This aspect improves handling of and safety on the opening cover.

The anchor points can be configured to carry 22 kN. They may only be connected to the composite panels. This allows the panels to be detached. There is advantageously no direct connection of the panels to the internal support frame (self-supporting). The anchor point base panel (composite) surface can be treated with suitable fire resistant materials such that it withstands at least 30 minutes of heat. This provides that individuals can winch down from the nacelle roof in case of fire in the nacelle. According to another advantageous aspect, the panels can be configured to fit in an enveloping cuboid that that is smaller than the inner volume of standardized freight containers, in particular 40 ft containers. Handling expenses can be vastly reduced if large load transports can be avoided.

The present invention also provides a wind driven power plant comprising the nacelle according to the aspects and embodiments of the invention.

The present invention also provides a wind park comprising a plurality of wind driven power plants according to the aspects and embodiments of the invention.

The present invention further provides a method of manufacturing and assembling a nacelle according to the aspects and embodiments of the invention.

### Brief description of drawings

Further aspects and characteristics of the invention will ensue from the following description of preferred embodiments of the invention with reference to the accompanying drawings, wherein
- FIG. 1 is a simplified perspective view of a wind driven power plant,
- FIG. 2 is a simplified perspective view of a wind turbine,
- FIG. 3 is a simplified perspective view of a nacelle of the wind turbine, the nacelle comprising a support frame,
- FIG. 4 is a simplified perspective view of a support frame of a nacelle,
- FIG. 5 is a simplified side view of a support frame.
- FIG. 6 is a simplified top view of the support frame,
- FIG. 7 is a simplified cross-sectional view of the support frame,
- FIG. 8 is a simplified sectional perspective view of a rear part of a nacelle,
- FIG. 9 is a simplified perspective view of a nacelle cover of the nacelle without nacelle roof,
- FIG. 10 is a simplified cross-sectional view of a flange connection of two nacelle cover panels, according to the prior art,
- FIG. 11 is a simplified cross-sectional view of a flange connection of two overlapping panels of the lateral side wall of the nacelle cover,
- FIG. 12 is a simplified cross-sectional view of a flange connection of an inner roof panel overlapping an outer roof panel of the nacelle roof,
- FIG. 13 is a simplified cross-sectional view of a flange connection attaching inner bottom panels to outer bottom panels of the nacelle,
- FIG. 14 is a simplified cross-sectional view of a flange connection attaching a hatch cover to a hatch in a panel,
- FIG. 15 is a simplified perspective view of a nacelle roof,
- FIG. 16 is a simplified perspective view of a nacelle roof,
- FIG. 17 is a simplified bottom view of a nacelle roof,
- FIG. 18 is a simplified perspective view of a nacelle,
- FIG. 19 is a simplified perspective view of the nacelle,
- FIG. 20 is a simplified perspective view of a nacelle comprising the nacelle roof in a lifting configuration,
- FIG. 21 is a simplified perspective view of a nacelle comprising the nacelle roof in a lifting configuration,
- FIG 22 is a simplified perspective view of an opening cover of the nacelle roof,
- FIG. 23 is a simplified perspective view of a wind turbine,
- FIG. 24 is a simplified perspective view of two separate hatches which are positioned in the rear part of the roof of the nacelle,
- FIG. 25 is a simplified perspective view of two separate hatches and the helicopter hoisting platform with a partially skipped handrail and a partially skipped nacelle cover,
- FIG. 26 is a simplified view on an exploded view of a part of the roof of the nacelle and a hatch extension,
- FIG. 27 is a simplified perspective view of a wind driven power plant comprising a helicopter hoisting platform,
- FIG. 28 is a simplified top view of a nacelle comprising the helicopter hoisting platform,
- FIG. 29 is a simplified top view the nacelle, having a detachable part of the nacelle roof and a detachable portion of the helicopter hoisting platform removed,
- FIG. 30 is a simplified perspective view of the nacelle, having a detachable part of the nacelle roof and a detachable portion of the helicopter hoisting platform removed,
- FIG. 31 is a simplified top view of a nacelle comprising a helicopter hoisting platform,
- FIG. 32 is a simplified top view of the nacelle, having a detachable part of the nacelle roof and a detachable portion of the helicopter hoisting platform removed,
- FIG. 33 is a simplified perspective view of the the helicopter hoisting platform,
- FIG. 34 is a simplified top view of a girder frame of the helicopter hoisting platform,
- FIG. 35 is a simplified top view of a girder frame of the helicopter hoisting platform,
- FIG. 36 is a simplified perspective view of a platform support,
- FIG. 37 is a simplified cross-sectional view of the platform support,
- FIG 38 is a simplified perspective view of the helicopter hoisting platform,
- FIG. 39 is a simplified perspective view of a wind driven power plant having a nacelle comprising a nacelle bottom cover,
- FIG. 40 is a simplified perspective view of a first and a second segment of the nacelle bottom cover,
- FIG. 41 is a simplified perspective view of the second segment of the nacelle bottom cover,
- FIG. 42 is a simplified perspective view of the first, second and a third segment of the nacelle bottom cover,
- FIG. 43 is a simplified perspective view of the nacelle bottom cover.
- FIG. 44 is a simplified perspective bottom view of a nacelle bottom having detachable inner bottom cover panels, and
- FIG. 45 is a simplified perspective bottom view of a nacelle bottom having the inner bottom cover panels removed in order to winch up/down a main shaft assembly of the wind turbine.

### Detailed description of embodiments

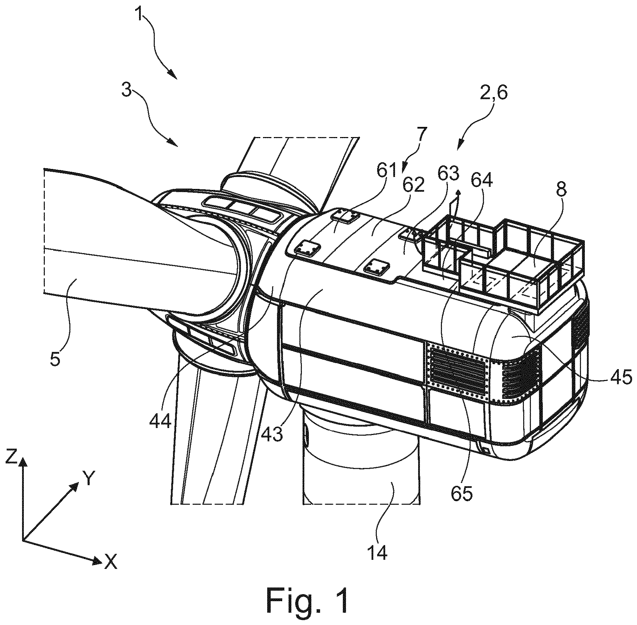

FIG. 1 shows a simplified perspective view of a wind driven power plant 1. The wind driven power plant 1 comprises a nacelle 2 and a rotor 3 having a hub 4 and rotor blades 5. The nacelle 2 extends in a vertical direction Z, which is substantially parallel to the axial extension of a supporting structure, in particular a tower 14 on which the nacelle 2 can be mounted. The nacelle also extends in a horizontal plane defined by a longitudinal direction X, which is substantially parallel to a drive train to be located in the nacelle, and a transversal direction Y. The longitudinal direction X and the transversal direction Y are both perpendicular to the vertical direction Z and to each other.

A nacelle roof 7 of the nacelle 2 comprises a plurality of panels 43-45, 61-67 made of a composite. The panels 43-45, 61-67 are connected to each other by means of connection flanges 37. The panels 43-45, 61-67 are configurable to provide openings of different sizes (and shapes) to the nacelle 2 by detaching and removing one or more inner roof panels 61-67.

The term "detachable" in this context should be understood to describe panels 61-67 and roof sections (which are distinct combinations of connected panels 61-67) that can be fully detached from the remaining part (e.g. the outer roof panels 43-45) of the nacelle 2 in an easy and convenient way. As such, removable and detachable panels 61-67 and/or center roof sections are configured to be physically lifted away from the nacelle 2, e.g. by a lifter, crane or helicopter and placed at ground level, e.g. on the ground surface or a jack-up barge. Sliding or revolving panels or roof sections which are not conceived to be easily and conveniently fully detachable from the nacelle 2 are therefore not considered to be removable and detachable within the meaning of this description.

A permanent connection is defined to be designed for single-time and/or permanent (or at least long lasting) engagement. Stated differently, the permanent connection is not constructed for a recurring engagement and disconnection.

A detachable connection is defined to be designed for recurring engagement and disconnection. Stated differently, the detachable connection is not constructed for single-time and/or permanent (or at least long lasting) engagement.

The nacelle cover 6 protects the drive train 31 and other internal components of the wind power installation 1 from harsh environmental conditions and in particular moisture.

The nacelle 2 comprises a support frame (not shown). The nacelle cover 6 is coupled to the support frame, particularly in lateral regions of the nacelle 2. The nacelle roof 6 is self-supported. This means that the self-supported nacelle roof 7 extends, while being unsupported by the support frame, at least in a centersection of the roof 7 (comprising the inner roof panels 61-67) from a first lateral side of the nacelle 2 to a second lateral side of the nacelle 2.

A top section of the framework structure is kept free of transversal and/or longitudinal beams in order to provide an upper passageway for insertion, removal and replacement of components. No intermediate beams or truss members project over the drive train. The main shaft assembly 29, the gear box 28, and/or the generator 30 can be inserted into the nacelle 2 or removed from the nacelle 2 via the opening in the multi-functional roof 7 and the upper passageway in a top section of the framework structure if the detachable roof panels are detached and removed in accordance with the aspects of the present invention.

The composite can be a glass fiber reinforced polymer (GFRP).

There is a helicopter hoisting platform 8 which is arranged and supported on a rear section of the nacelle roof 7. Technical staff and material can be hoisted onto the hoisting platform 8 from a helicopter.

A wind park can comprise a plurality of the depicted wind driven power plants 1 comprising the nacelle 2.

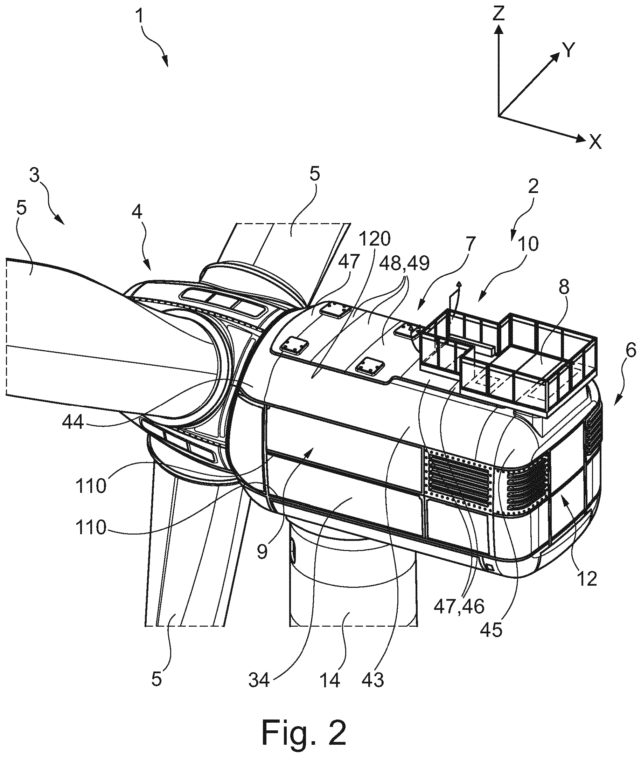

FIG. 2 shows a simplified perspective view of the wind turbine 1. The wind turbine 1 comprises a nacelle 2.

The nacelle 2 comprises a support frame 15 (not shown) and a nacelle cover 6 that is coupled to the support frame 15.

The nacelle cover 6 comprises a plurality of panels 34 made of a composite, i.e. a glass fiber reinforced polymer (GFRP). Depending on the configuration and/or function of the panels 34, the description can refer to panels 34 by more specific terms, i.e. (referring to panels 34 of the nacelle roof 7) as outer lateral roof panel 43, outer front roof panel 44, outer rear roof panel 45, and inner roof panels 47. A plurality 48 of inner roof panels 47 can form or be a part of one or more center (roof) sections 46.

The panels 34 are connected to each other by means of connection flanges 37 that are integral to the panels.

The nacelle cover 6 comprises a self-supported nacelle roof 7 comprising a plurality of panels 43-45, 47. The self-supported nacelle roof 7 extends, in particular unsupported by the support frame 15, from the first lateral side wall 9 of the nacelle 2 to the second lateral side wall 10 of the nacelle.

The center of the self-supported nacelle roof 7 is designed as a large removable and detachable hatch cover for extensive service operations. More precisely, the inner roof panels 47, 48 in the center roof sections 46 of the nacelle roof 7 are designed to be removable, either alone or in distinct combinations of a plurality 48 of inner roof panels 47 forming the one or several removable and/or detachable center roof sections 46.

The term "detachable" in this context should be understood to describe panels 47 and roof sections 46 (which are distinct combinations of connected panels 47) that can be fully detached from the remaining part (e.g. the outer roof panels 43- 45) of the nacelle 2 in an easy and convenient way. As such, removable and detachable panels 47 and/or center roof sections 46 are configured to be physically lifted away from the nacelle 2, e.g. by a lifter or crane, or by a helicopter and placed at ground level, e.g. on a jack-up barge. Sliding or revolving panels or roof sections which are not conceived to be easily and conveniently fully detachable from the nacelle 2 are therefore not considered to be removable and detachable within the meaning of this description.

In other words, a detachable connection is designed for repeated engagement and disconnection. The detachable connection is not constructed for single-time and/or permanent (or at least long lasting) engagement.

A permanent connection, on the other hand, is designed for single-time and/or permanent (or at least long lasting) engagement. Stated differently, the permanent connection is not constructed for a recurring engagement and disconnection.

For example, a welded connection is obviously considered to be a permanent connection.

A screwed connection, however, can be considered to form a detachable connection as well as a permanent connection, depending on the configuration of the screwed connection and the intended purpose.

A screwed connection comprising a castle nut secured by a safety cotter pin, for example, may be designed for easy and convenient detachment (and reattachment). The same applies to a screwed connection comprising a low- strength liquid bolt retaining compound (such as "Loctite 221", "Loctite 222" or comparable), which may be reapplied after every detachment.

A screwed connection comprising a medium-strength liquid bolt retaining compound (such as "Loctite 243" or comparable) or a high-strength liquid bolt retaining compound (such as "Loctite 270", "Loctite 276" or comparable), however, forms a permanent connection, even if such a connection can still be detached, for example by using solvents, a heat treatment, or special tools.

There is a helicopter hoisting platform 8 which is arranged and supported on a rear section of the nacelle roof 7. Technical staff and material can be hoisted onto the hoisting platform 8 from a helicopter.

Platform supports that are integral to the self-supported nacelle roof 7 support the helicopter hoisting platform 8. The helicopter hoisting platform 8 is separate from the nacelle roof 7, i.e. non-integral to the nacelle cover 6.

A wind park can comprise a plurality of the depicted wind turbines 1 comprising the nacelle 2.

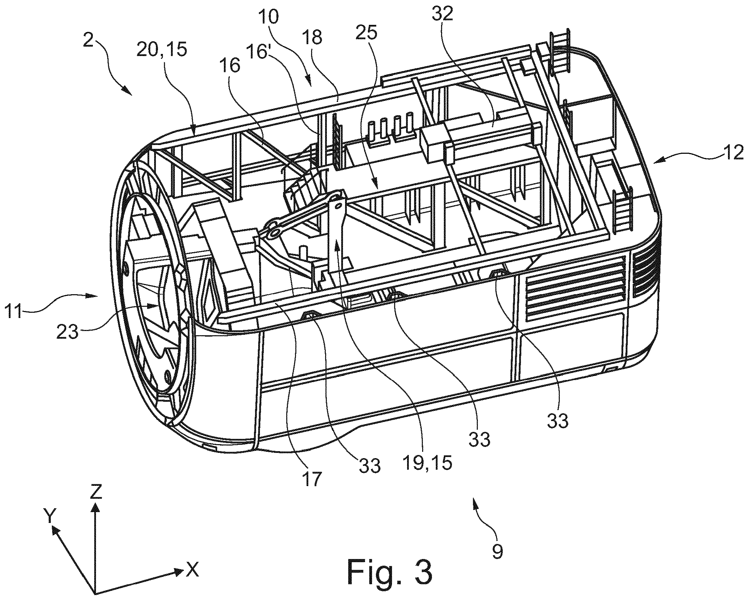

FIG. 3 shows a simplified perspective view on a nacelle of the wind turbine. The top cover of the nacelle is not shown. The nacelle 2 comprises a support frame 15 and a nacelle cover 6 (nacelle envelope, housing) surrounding (enclosing) the support frame 15.

The support frame 15 comprises a framework of beams 16 (truss members). The support frame 15 further comprises a first upper lateral longitudinal beam 17 at a first lateral side of the nacelle 2 and a second upper lateral longitudinal beam 18 at a second lateral side of the nacelle 2 being opposite to the first lateral side.

The term "longitudinal" means that the beam extends in the longitudinal direction of the nacelle 2.

The support frame can generally comprise different levels or various gangways and/or passages on different levels (altitudes).

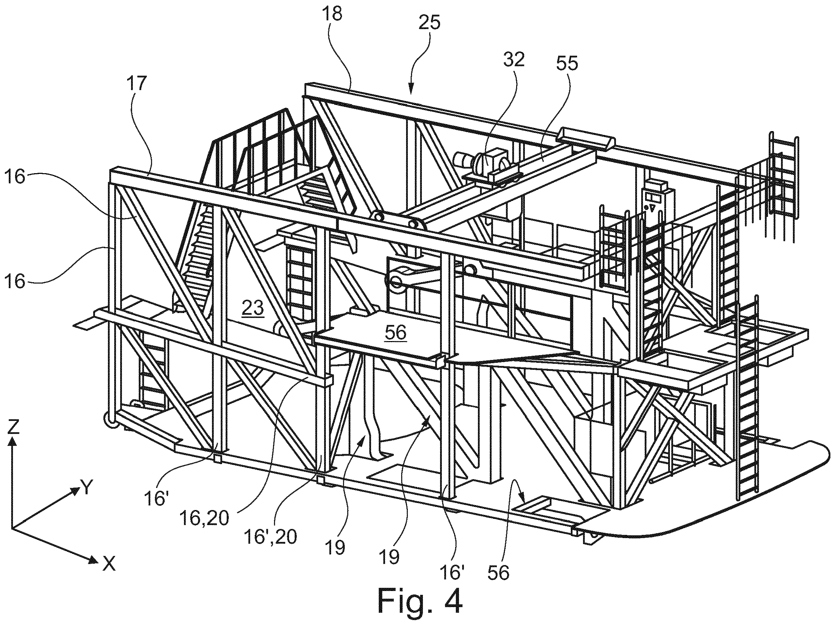

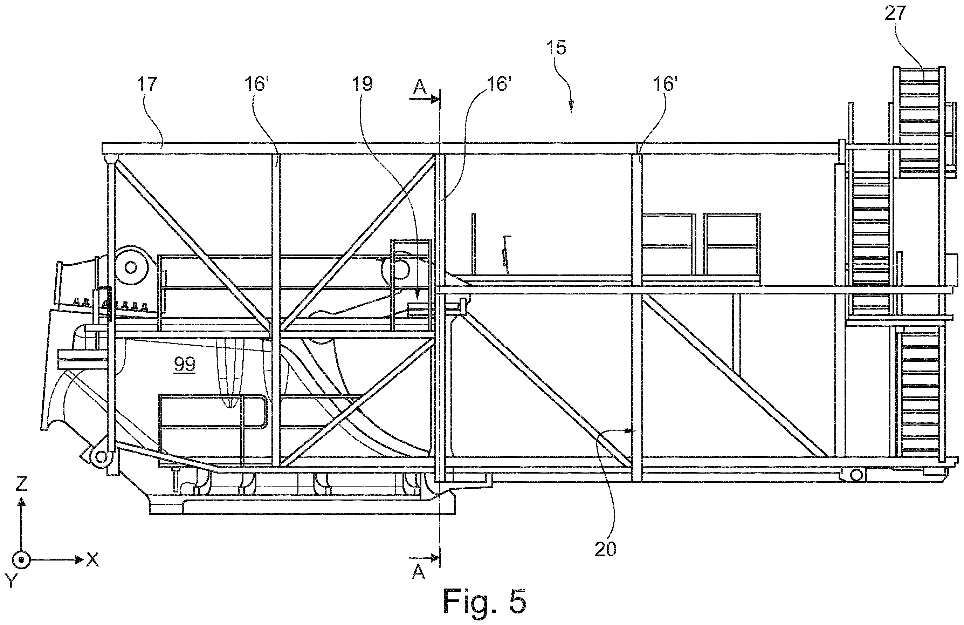

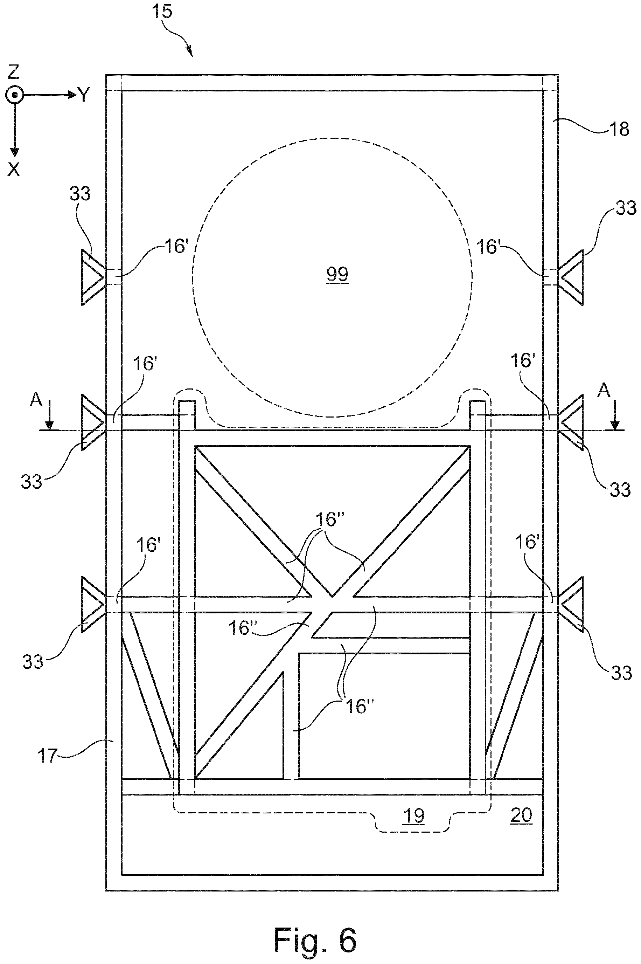

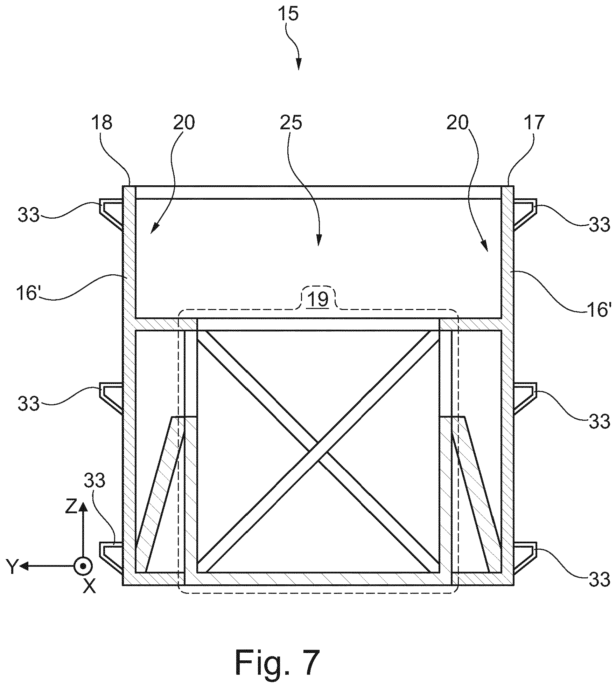

FIG. 4, FIG. 5, FIG. 6 and 7 show different views of a support frame 15 of the nacelle 2. The support frame 15 comprises a lower, inner/central portion (which is referred to as machine frame or inner support frame 19), and a framework structure arranged along a perimeter of the machine frame (which is referred to as outer support frame 20). The machine frame 19 is connected to the main frame 99 of the wind turbine 1. The framework structure of the outer support frame 20 is connected to the machine frame / inner support frame 19. The framework structure of the outer support frame 20 extends in a main direction from the lower part of the machine frame 19 along the vertical direction Z.

The first and the second upper lateral longitudinal beams 17, 18 substantially terminate lateral sections of the framework structure in the vertical direction Z.

A front section of the framework structure is free to provide a frontal passageway 23 for a main shaft (not shown). The main shaft connects a rotor hub (on the outside of the nacelle) and a gear box and/or a generator (on the inside of the nacelle, not shown).

A top section of the framework structure is kept free of transversal and/or longitudinal beams in order to provide an upper access opening or upper passageway for insertion, removal and replacement of components. No intermediate beams or truss members project over the drive train. The main shaft assembly, the gear box, and/or the generator (not shown) can be inserted into the nacelle 2 or removed from the nacelle 2 via the upper access opening or upper passageway 25 in the top section of the framework structure if the roof of the nacelle or rather the center (central section) of the roof can be removed and detached in accordance with the aspects of the present invention.

The whole drive train comprising the main assembly, the gearbox and the generator can be lowered into the nacelle and/or lifted from the nacelle through the upper passageway 25 in the top section of the framework structure if the top cover or roof of the nacelle is removed and detached in accordance with the aspect of the present invention.

A bottom section of the framework structure of the inner support frame can also comprise a lower access opening or lower passageway for lowering down or winching up components such as the generator, the main shaft assembly, the gearbox or other parts. Some (inner) truss members 16" of the inner support frame are configured to be removable to allow for the lower passageway to be enlarged temporarily.

The nacelle bottom cover can be configured to be removable and detachable at least in a center section such that parts of the drive train 31 can be lowered down and outside the nacelle 2. As such, inner bottom cover panels 133 can be designed as a sealed removable and detachable lid.

The nacelle bottom cover can comprise a service hatch in a rear inner bottom cover panel 133. The service hatch can comprise double wing doors, which may be supported by gas springs and open in an inward direction.

The nacelle cover 6 is mounted to the (outer) support frame 20, more particularly to (preferably vertical) beams 16' (columns) of the outer support frame via adjustable brackets 33. In the present embodiment, there are nine brackets in a three-by-three configuration arranged on each lateral side of the outer support frame 20.

A service crane 32 that is mounted on a trolley 55 which is configured to move on the first and second upper lateral longitudinal beams, providing internal lifting capacity for regular maintenance work. The trolley 55 can be configured to roll on the first and second lateral beams along the entire nacelle internals, in particular along the entire drive train. The trolley can be locked in a parking position, if the entire drive train is to be lifted.

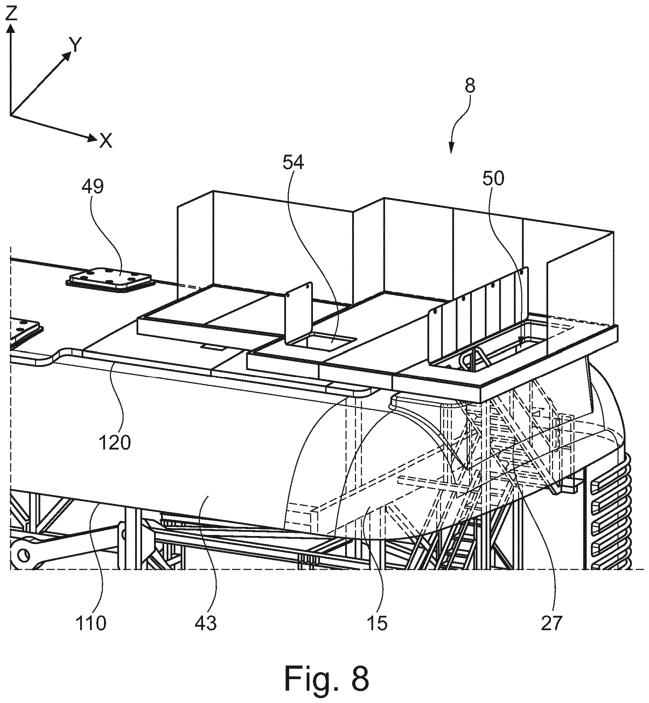

FIG. 8 shows a simplified sectional perspective view of a rear part of the nacelle 2. Some elements of the nacelle cover 6 and the railing fence of helicopter hoisting platform 8 are not shown to provide a view into the rear part of the nacelle 2.

The helicopter hoisting platform 8 comprises a rectangular access hatch 50 for a 45° stairway 27 centered in a rear section of the helicopter hoisting platform 8, and a supply hatch 54 arranged in a lateral region of the helicopter hoisting platform 8.

The stairway 27 is part of and/or connected to the (outer) support frame 15.

The (upper surface of) hatch covers 50, 54 are leveled (on the same level) with the walkable surface of helicopter hoisting platform 8.

The hatch covers are opened outwardly and rotated about the transversal direction Y towards the rotor 3. This arrangement provides for a minimal windage area exposed to the downwash of a helicopter hovering over the helicopter hoisting platform 8.

When closed, the hatch covers 50, 54 provide a walkable surface with anti- skid properties. Further, the hatch covers form an obstacle-free flat surface that is flush with the surrounding walkable area.

The respective hatch covers hermetically seal the corresponding hatches 50,
54 when closed.

Approximate hatch size of the access hatch 50 is 305 cm x 85 cm, in particular the access hatch 50 is longer than 200 cm and wider than 70 cm.

The access hatch 50 is equipped with hinges, gas springs, locking devices and a sealing rubber (elastomeric) element.

The hatches 50, 54 can be hold locked in the open position by a locking mechanism.

At least the access hatch 50 (but preferably most or all hatches 50, 54, 49) can be operated from the inside and the outside of the nacelle 2.

An upraised hatch adapter 95 levels the hatch covers 50, 54 with the surrounding walkable surface.

The approximate size of the support hatch 54 is 75 cm x 75 cm.

The support hatch 54 is equipped with hinges, gas springs, locking devices and a sealing rubber (elastomeric) element.

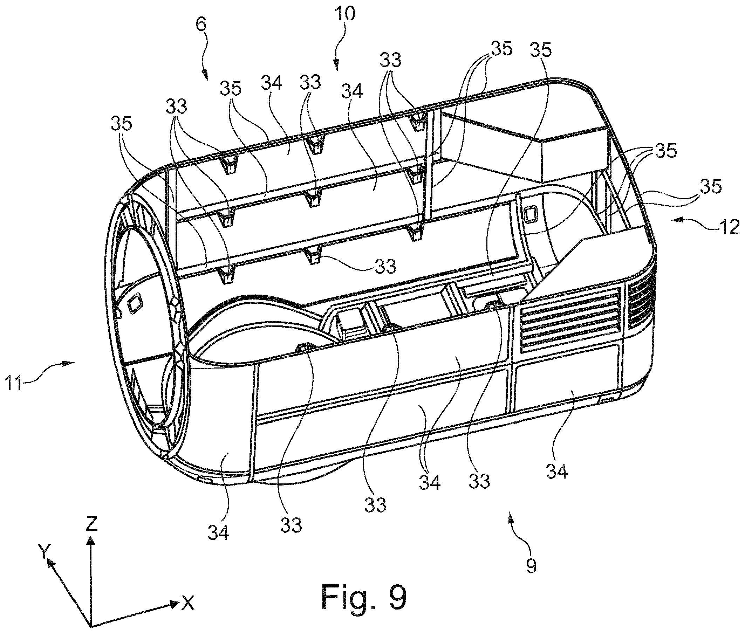

FIG. 9 shows a simplified perspective view on and into a nacelle cover 6 of the nacelle 2 without the nacelle roof 7 and the support frame 15. The nacelle cover 6 is generally made of and formed by a plurality of composite reinforced panels 34. The panels 34 are connected by flanges. The flange connection can be further reinforced by angular steel or other profiled metal bars 35. The nacelle cover 6 protects the drive train 31 and other internal components of the wind power installation 1 from harsh environmental conditions and in particular moisture.

The nacelle cover 6 comprises lateral nacelle side walls 9, 10, a nacelle front face 11, a nacelle rear wall 12, a nacelle bottom cover 13, and a nacelle roof 7.

The nacelle cover 6 is coupled to the support frame 15. More particularly, the lateral side walls 9, 10 of the nacelle cover 6 are coupled to the outer support frame 15. The nacelle roof 7 may also be coupled to the support frame 15. Thereby, the nacelle cover is directly or indirectly laterally supported by the support frame 15.

The laterally supported nacelle cover 6, including the wide span self- supported nacelle roof 7, is configured to guarantee structural integrity under predefined load cases, considering reaction loads between the composite panels of the nacelle cover 6 and the support frame 15, and performance in open and closed configurations.

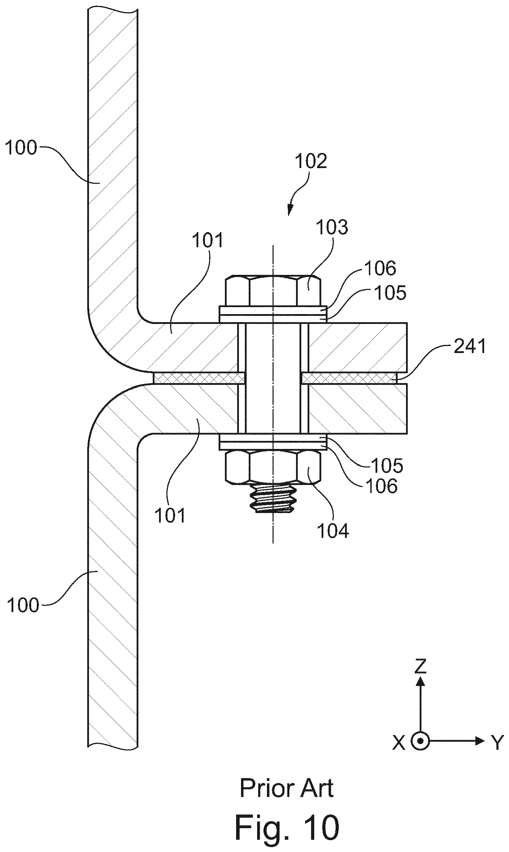

FIG. 10 shows a simplified cross-sectional view of a flange connection of two nacelle cover panels 100, according to the prior art. Flanges 101 extend perpendicularly from the panels 100. The flanges 101 are connected by a bolted (screwed) connection 102 on the in inside of the nacelle. This provides that the bolt 103 and the nut 104 are both accessible from inside the nacelle. The bolted connection may comprise additional washers 105 (i.e. optional elastomeric washers for sealing and/or spring washers) and metallic washers 106. Advantageously, due to the configuration of the flanges 101, the bolted assembly 102 on the inside of the nacelle is well protected from environmental effects outside the nacelle.

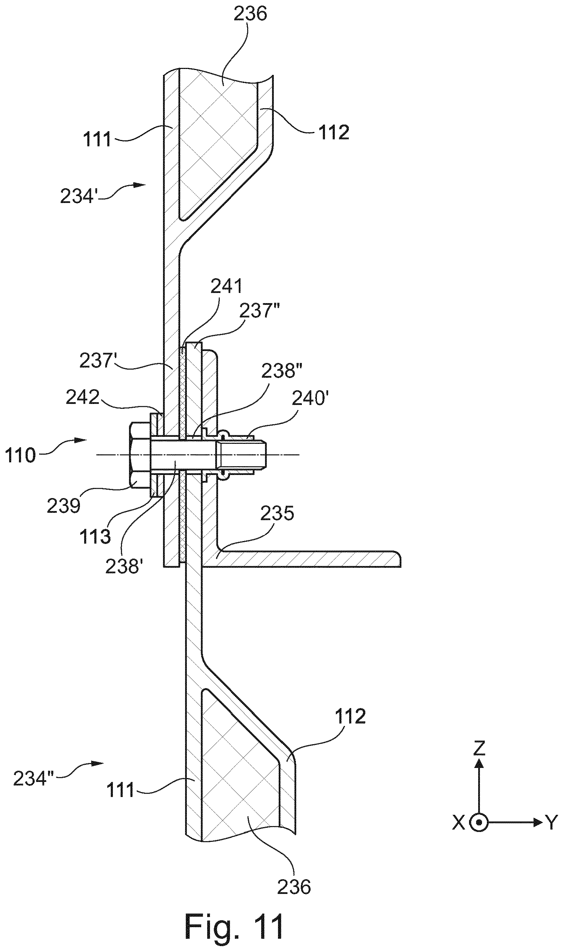

FIG. 11 shows a simplified perspective cross-sectional view of an exemplary flange connection 110 of two overlapping nacelle cover panels 234 according to an aspect of the invention. This flange connection is also referred to as a flange connection of a first type. The first type is advantageously used for the lateral and/or rear sides of the nacelle cover 6, i.e. for vertically extending sides and panels. The first type of flange connection is a planar flange connection. The nacelle panels 234 are made of a composite, in particular a glass fiber reinforced polymer (GFRP).

Each composite panel 234 is manufactured as a wide span self-support composite panel. The panel 234 is configured as a typical sandwich lamination. Each panel 234 comprises an outer side fiberglass layer 111 and an inner side fiberglass layer 112. The panels 234 can optionally comprise a middle foam core 236 in-between the outer side fiberglass layer 111 and the inner side fiberglass layer 112. The foam core 236 can be configured to form reinforcement ribs in the panel 234. Alternatively, the foam core 236 can be a global foam core 236, i.e. spanning a major part of the panel 234. The foam cores 236 are covered by the outer side and inner side fiberglass layers 111, 112 and enhance the stability of the panel 234.

Resin infusion is utilized during the lamination process. In a one-shot resin infusion process, the resin is distributed in a uniform manner across the layup. Subsequently, bonding/curing the complete layup can be conducted, e.g. in an autoclave. Accordingly, a majority or all the composite panels of the nacelle are manufactured in a one-shot lamination/manufacturing step.

The panels 234 are connected to each other by means of overlapping flanges 237. Each of the flanges 237 is integral to one of the panels 234. The flanges 237 advantageously extend in the same plane as the panel 234 to which it belongs or at least in substantially the same plane as the region of the panel 234 adjacent to the flange 237. In other words, the respective flange 237 extends essentially straightly (not bent or curved) from the adjacent region of the panel 234.

The split line between the panels 234', 234" of the nacelle cover 6 extend in flat planes perpendicular to the surface of the panels and along the flange connection 110 between the panels 234', 234" (here in direction X).

The arrangement of the panels of the nacelle cover in general, and in particular of the overlapping flanges 237, is based on a high-point drainage concept. This means that the flange 237' of the top panel 234' of a flange connection 110 having a higher altitude (greater level) spans/overlaps the flange 237" of the complementary bottom panel 234" (the bottom panel 234" having a lower altitude) on an outer surface of the nacelle in a downward direction. Hence, the arrangement of the overlapping flanges 237', 237" advantageously exploits gravitational forces which determine the water flow direction in order to keep water from flowing into the nacelle.

The drillings 238 (drill holes) for the flange connection 110 are applied after the manufacturing process of the composite panels 234, i.e. after curing and/or autoclaving the panels 234. Drilling of the drill holes can be conducted after the respective panels 234', 234" are adjusted to each other, or alternatively by using a drilling template or a CNC-guided drilling machine. With this procedure, the accuracy of fit of corresponding drillings 238', 238" in the flanges 237 of both respective panels 234 is advantageously ensured.

According to an aspect, specialized threaded bolts 239 and nuts 240 are used. Either a (clinch) bolt 239' or a (clinch / rivet) nut 240' is pressed (clinched, riveted) into a reinforcing metal beam 235 that is part of the flange connection 110. Given this procedure, the attached threaded bolt 239' or nut 240' is fixed in position and is not rotatable. The complementary nut 240 or bolt 239 used to tighten the connection joint can accordingly be applied from the inside or outside of the nacelle, depending on the configuration (the flange connection 110 being a permanent connection or a detachable connection). Generally, a detachable flange connection should be accessible at least from inside the nacelle. No access to the joint is necessary from the outside which advantageously decreases the risk during assembling or maintaining the nacelle. A permanent flange connection 1 may be operated (loosened/disengaged, tightened/engaged) from inside or the outside the nacelle, depending on accessibility of the flange connection.

In this embodiment, a rivet nut 240' is riveted to the metal bar 235 on the inside. The bolt 239 is screwed into the rivet nut 240' from the outside.

The flange connection 110 is reinforced by profiled metal bars 235 (metal beams), which can be arranged adjacent to the flanges 237 (and extending along the split line), thereby becoming a part of the flange connection 110. The metal bars 235 can, for example, exhibit a flat bar shape and/or an "L"-shape (as shown). The metal bars 235 are mounted to the connection joints to stabilize the flange connection. Furthermore, the "L"-shaped metal bars 235 are further used and configured to mount the composite panels 234 to the lateral sections of the framework structure of the support frame. Adjustable brackets can be coupled to the L-shaped or angular metal bars 235 and the support frame, i.e. the beams or truss members of the outer support frame.

The metal bars 235 can be arranged and conductively interconnected such that they form a Faraday cage to provide a lightning protection of the drive train and other components.

Between the panels 234 a sealing 241 is applied and provides water and air tightness of the flange connection 110. Water and air tightness generally refers to a liquid/fluid ingress protection under environmental conditions the nacelle is exposed to. Moreover, sealing paste can be used to tighten the drill holes 238', 238" with respect to water and air. A liquid bolt retaining compound (also: liquid screw retention or liquid screw locking) can protect the screwed connection of the bolt 239 and the nut 240 against undesired loosening. An elastomeric (rubber/silicone) washer 242 is applied between a steel washer 113 and the flange 237.

The flange connection 110 is designed to be a substantially maintenance free connection, having an expected/calculated lifetime of approximately twenty-five years.

In short, the flange connection 110 comprises (from outside to inside of the nacelle) a bolt 239 extending through a metal washer 113, an elastomeric washer 242, a drill hole 238' in the outer/top panel 234', an elastomeric sealing 241, a drill hole 238" in the inner/bottom panel 234", and a rivet nut 240' riveted into a hole of a profiled metal bar 235. The bolt 239 is screwed into the rivet nut 240' from the outside.

The concept of planar flange connections 110 in combination with the high- point drainage concept has surprisingly proven to be more robust and easier to maintain than the prior art flange connections 100.

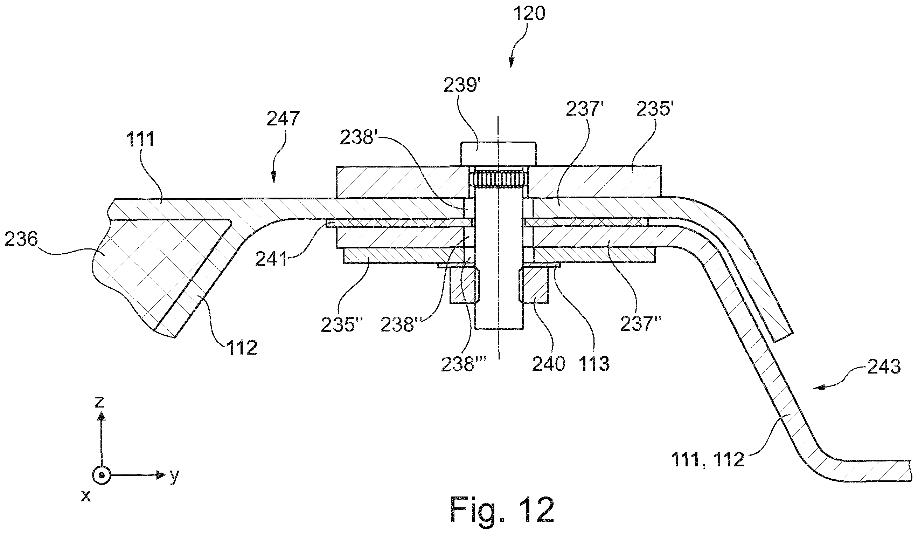

FIG. 12 shows a simplified cross-sectional view of a flange connection 120 of an inner roof panel 247 overlapping an outer lateral roof panel 243 of the nacelle roof. The configuration/construction of the panels 234, more specifically the inner roof panels 247 and outer roof panels 243 is substantially comparable/similar to the panels 234 of the side 243 and rear walls 245 of the nacelle. This flange connection 120 is also referred to as a flange connection of a second type. The second type of flange connection is a planar flange connection. The second type of flange connection is advantageously used for roof panels of the nacelle cover.

Each panel 247, 243 comprises an outer side fiberglass layer 111 and an inner side fiberglass layer 112. The panels 247, 243 can optionally comprise a middle foam core 236 in-between the outer side fiberglass layer 111 and the inner side fiberglass layer 112. The foam core 236 can be configured to form reinforcement ribs in the panels 247, 243. Preferably, the ribs extend along the vertical direction Z and/or the transverse direction Y. Alternatively, the foam core 236 can be a global foam core 236, i.e. spanning over a major portion of the panel 247, 243. The foam cores 236 are covered by the outer side and inner side fiberglass layers 111, 112 and enhance the stability of the panels 247, 243.

The panels 247, 243 are connected to each other by means of overlapping flanges 237. Each of the flanges 237 is integral to one of the panels 247, 243. The flanges 237 advantageously extend in the same plane as the panel 247, 243 to which it belongs or at least in substantially the same plane as the region of the panel 247, 243 adjacent to the flange 237.

The split line between the panels 247, 243 of the nacelle cover 6 extend in flat planes perpendicular to the surface of the panels and along the flange connection 120 between the panels 247, 243' (here in direction X).

The arrangement of the panels of the nacelle cover in general, and in particular of the overlapping flanges 237, is based on the high-point drainage concept. This means that the flange 237' of the top panel 234' of a flange connection 120 having a higher level overlaps the flange 237" of the complementary bottom panel 234" on an outer surface of the nacelle in a downward direction.

The drill holes 238 for the flange connection 120 are applied after the manufacturing process of the composite panels 243, 247.

A clinch bolt 239' having a straight-knurled press-fit collar below its head (or generally speaking under heads serrations) is pressed into a(n outer) reinforcing metal bar 235' that is part of the flange connection 120. The clinch bolt 239' is fixed to the metal bar 235' in a rotatably fixed manner.

A complementary nut 240 is used to tighten the flange connection 120.

The flange connection 120 is a detachable flange connection and can be detached from inside the nacelle.

The flange connection 120 is reinforced by profiled metal bars 235', 235" on the inside and the outside of the nacelle adjacent to the top flange 237' and the bottom flange 237", respectively. The metal bars 235', 235" substantially sandwich the flanges 237', 237" of the panels 247, 243 in-between. The metal bars 235', 235" extend along the split line (the direction of extension of the flange connection 120 between panels). The metal bars 235', 235" are a part of the flange connection 120. The metal bars 235 can have a flat bar shape (as shown) or a "L"-shaped profile (not shown).

The metal bars 235 can be arranged and conductively interconnected such that they form a Faraday cage to provide a lightning protection of the drive train and other components.

Between the panels 247, 243 a sealing 241 is applied and provides water and air tightness of the flange connection 120. Water and air tightness generally refers to a liquid/fluid ingress protection under environmental conditions the nacelle is exposed to.

Moreover, sealing paste can be used to tighten the drill holes 238', 238" with respect to water and air. A liquid bolt retaining compound can protect the screwed connection of the (clinch) bolt 239' and the nut 240 against undesired loosening. The flange connection 120 further comprises a steel washer 113 (and/or spring washer) between the inside metal bar 235" and the nut 240.

The flange connection 120 is designed to be a substantially maintenance free connection, having an expected/calculated lifetime of approximately twenty-five years.

In short, the flange connection 120 comprises (from outside to inside of the nacelle) a bolt 239' pressed into (a hole in) the outside metal bar 235', and further extending through a drill hole 238' in the top flange 237' (of the inner roof panel 247), an elastomeric sealing 241, a drill hole 238" in the bottom flange 237", a hole in an inside metal bar 235"and a nut 240 screwed to the bolt 239' from the inside.

The concept of planar flange connections 120 in combination with the high- point drainage concept has surprisingly proven to be more robust and easier to maintain than the prior art flange connections 100.

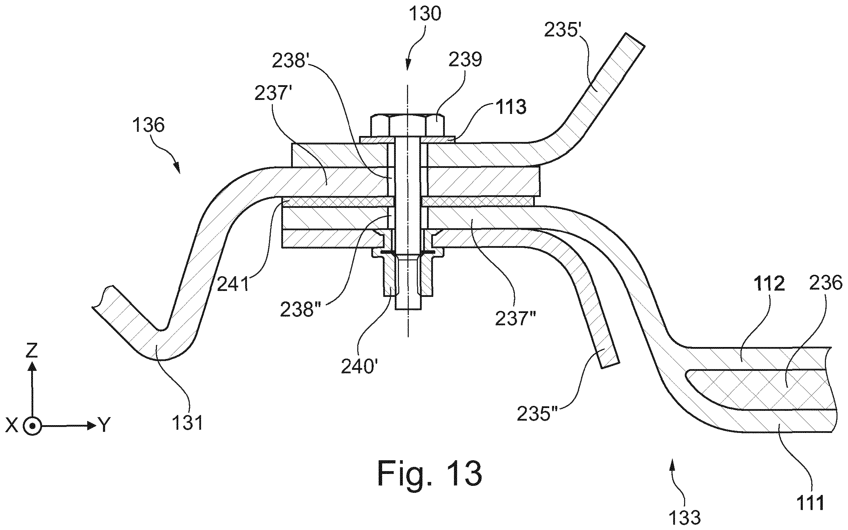

FIG. 13 is a simplified cross-sectional view of a flange connection 130 attaching inner bottom panels 133 to outer bottom panels 136 of the nacelle. This flange connection is also referred to as a flange connection of a third type. The third type of flange connection is a planar flange connection. The third type is advantageously used for the bottom panels, in particular for connecting the inner bottom panels 133 to the outer bottom panels 136. The configuration/construction of the panels, more specifically the inner bottom panels 133 and outer bottom panels 136, is substantially comparable/similar to the panels 247, 243 of the nacelle roof.

Each panel 133, 136 comprises an outer side fiberglass layer 111 and an inner side fiberglass layer 112. The panels 133, 136 can optionally comprise a middle foam core 236 in-between the outer side fiberglass layer 111 and the inner side fiberglass layer 112. The foam core 236 can be a global foam core 236, i.e. spanning over a major portion of the panels 133, 136. The foam cores 236 are covered by the outer side and inner side fiberglass layers 111, 112 and enhance the stability of the panels 133, 136.

The panels are connected to each other by means of overlapping flanges 237. Each of the flanges 237', 237" is integral to one of the panels 133, 136. The flanges 237 advantageously extend in the same plane as the panel 133, 136 to which it belongs, or at least in substantially the same plane as the region of the panel adjacent to the flange 237.

The split line between the panels 136, 133 of the nacelle cover 6 extend in flat planes perpendicular to the surface of the panels and along the flange connection 130 between the panels 136, 133 (here in direction X).

The arrangement of the panels of the nacelle cover in general, and in particular of the overlapping flanges 237', 237" and the inner and outer bottom panels 133, 136 in the bottom of the nacelle, is based on the high-point drainage concept.

The inner bottom panels 133 are configured to be detachable panels. The inner bottom panels 133 cover/span the opening between the outer bottom panels 136 from the outside.

With regard to the high-point drainage concept, this means that the outer bottom panels 136 comprise a(n outer) drip edge 131 that has a substantially lower level than the flange connection 130.

In other words, the flange connection 130 according to this embodiment is located in an indentation with respect to a surrounding surface of the adjacent panels 133, 136. This kind of flange connection is advantageously used at the bottom of a nacelle. The flange connection does then have greater height (altitude) than the surrounding panels which improves water tightness.

The drill holes 238 for the flange connection 130 are applied after the manufacturing process of the composite panels 133, 136.

Either a bolt 239' or a nut 240' is pressed into a reinforcing metal beam 235 that is part of the flange connection 130. The attached threaded bolt 239' or nut

40' is therefore fixed in position and not rotatable. The complementary nut 240 or bolt 239 used to tighten the connection joint can accordingly be applied from the inside or outside of the nacelle, depending on the configuration (the flange connection 130 being a permanent connection or a detachable connection). Generally, a detachable flange connection should be accessible from inside the nacelle. A permanent flange connection 1may be operated (loosened/disengaged, tightened/engaged) from inside or the outside the nacelle, depending on accessibility of the flange connection.

In this embodiment, a rivet nut 240' is riveted to the lower metal beam 235". A bolt 239 is screwed into the rivet nut 240' from the inside to tighten the detachable flange connection 130.

The flange connection 120 is reinforced by profiled metal bars 235', 235" on the inside and the outside of the nacelle adjacent to the top flange 237' and the bottom flange 237", respectively. The metal bars are substantially "L-shaped having an obtuse angle (shown) or alternatively have a flat bar profile (not shown). The metal bars 235', 235" substantially sandwich the flanges 237', 237" of the panels 136, 133 in-between. The metal bars 235', 235" extend along the split line between adjacent panels. The metal bars 235', 235" are a part of the flange connection 130.

The metal bars 235 can be arranged and conductively interconnected such that they form a Faraday cage to provide a lightning protection of the drive train and other components.

Between the panels 136, 133 a sealing 241 is applied and provides water and air tightness of the flange connection 130.

Moreover, sealing paste can be used to tighten the drill holes 238', 238" with respect to water and air. A liquid bolt retaining compound can protect the screwed connection of the bolt 239 and the rivet nut 240' against undesired loosening. The flange connection 130 further comprises a steel washer 113 (and/or a spring washer) between the inside metal bar 235' and the bolt 239.

The flange connection 130 can be designed to be a substantially maintenance free connection.

In short, the flange connection 130 comprises (from inside to outside of the nacelle 2) a bolt 239 extending through a metal washer 113 and a hole of the inside metal bar 235', the bolt 239 further extending through a drill hole 38' in the top flange 237' (of the outer bottom panel 136), an elastomeric sealing 241, a drill hole 238" in the bottom flange 237" (of the inner bottom panel 133), and a rivet nut 240' riveted into in an outside metal bar 235". The bolt 239 is screwed into the rivet nut 240' from the inside.

The concept of planar flange connections 130 in combination with the high drainage concept has surprisingly proven to be more robust and easier to maintain than the prior art flange connections 100.

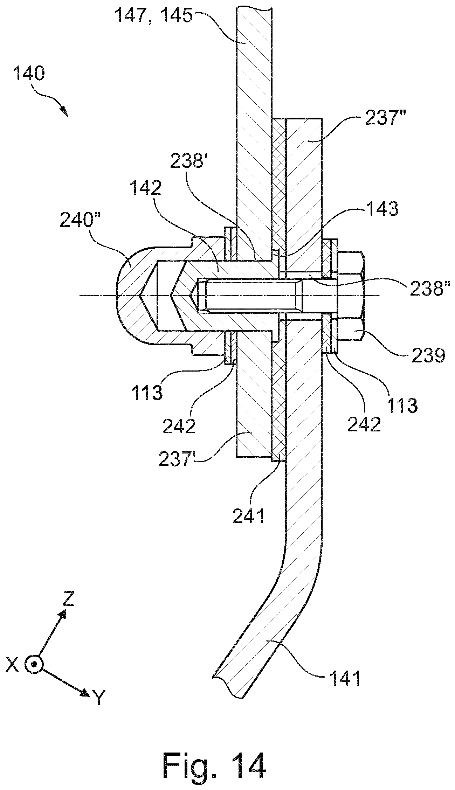

FIG. 14 is a simplified cross-sectional view of a flange connection 140 attaching a hatch cover 141 (e.g. of a lateral extension arm hatch) to an outer front or rear bottom panel 147, 145. This flange connection is also referred to as a flange connection of the fourth type. The fourth type is also a planar flange connection. The fourth type of flange connection is advantageously used for hatch covers in the region of a side wall, rear wall and/or front face of the nacelle. The hatch cover 141 can be opened and closed from inside the nacelle.

The panel 147, 145 and the hatch cover 141 are connected to each other by means of overlapping flanges 237. Each of the flanges 237', 237" is integral to one of the panel 147, 145 and the hatch 141, respectively. The flange 237 extends in the same plane as the panel 147, 143.

The hatch cover 141 covers/spans the opening in the outer front/rear bottom panel 147, 145 from the inside.

The drill holes 238 for the flange connection 130 are applied after the manufacturing process of the composite panels 147, 145, 141.

A bushing 142 having a male (outer) threading at an outer surface and a female (inner) threading at an inner surface comprises (in axial direction of the threading) a thin end and a thickened end comprising a collar 143. The bushing 142 is inserted - thin end first, thickened end last - from inside to outside the nacelle through a drill hole 238' in the outside flange 237'. A cap nut 240" is screwed onto the male threading of the bushing 142 from the outside. The cap nut 240" and outside flange 237' sandwich a steel washer 113 and an elastomeric washer 242 in-between. The steel washer 113 is positioned adjacent the cap nut 240", the elastomeric washer 242 between steel washer 113 and outside flange 237'. There is a sealing 241 positioned adjacent to the outside flange 237' of the outer (bottom) panel 147, 145 and sandwiched between the outside flange 237' and the inside flange 237". A bolt 239 extends (from the inside) through a steel washer 113, an elastomeric washer 242, a hole in the inside flange 237", and the sealing 241. The bolt 239 is screwed into the female threading of the bushing 141.

Moreover, sealing paste can be used to tighten the drill holes 238', 238" in the flanges 237', 237" with respect to water and air. A liquid bolt retaining compound can protect the screwed connection of the cap nut 240" and the bushing 142, and the bolt 239 and the bushing 142 against undesired loosening.

The flange connection 130 can be designed to be a substantially maintenance free connection.

In short, the flange connection 130 comprises (from inside to outside of the nacelle) a bolt 239 extending through a metal washer 113 and an elastomeric washer 242. The bolt 239 further extends through a drill hole 238" in the inside flange 237" (of the hatch cover 141), an elastomeric sealing 241, into a bushing 142. The bushing extends through a hole 238' in the outside flange 237', an elastomeric washer 242, a steel washer 113 and into the cap nut 240". The bolt 239 is screwed into the bushing 142, and the bushing 142 is screwed into the cap nut 240".

The concept of planar flange connections 140 provides an air and watertight hatch cover that can be operated from inside the nacelle.

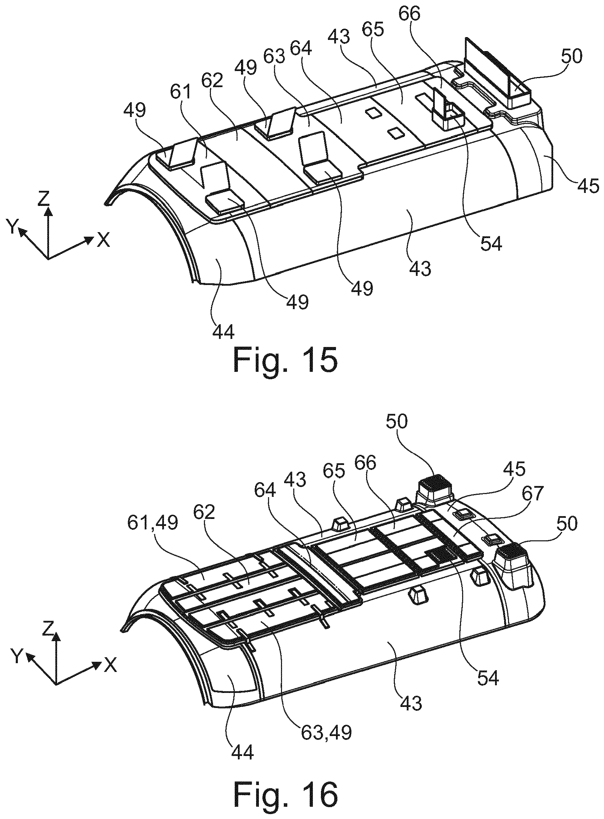

FIG. 15 shows simplified perspective views of a first embodiment of a multifunctional nacelle roof 7. The inner roof panels 61-66 are configurable to provide a first opening in the nacelle roof 7, the opening having a first size and shape suitable for inserting/removing a complete drive train 31 of the wind driven power plant 1 and a second opening having a second size and shape suitable for inserting/removing a generator 30 of the wind driven power plant.

The nacelle roof 7 is considered to be self-supported and supported by the lateral nacelle side walls 9, 10, the nacelle rear wall 12 and/or the support frame. Accordingly, the nacelle roof 7 is only supported along sections of its outer (lower) circumference. Therefore, the nacelle roof 7 is unsupported by the support frame in a central area.

Basically, the nacelle roof 7 comprises four outer roof panels (two outer lateral roof panels 43, one outer front roof panel 44, and one outer rear roof panel 45). The outer roof panels are supported by the lateral nacelle side walls 9, 10 and the nacelle rear wall 12.

The nacelle roof 7 comprises six inner roof panels 61-66 in a central/inner area of the nacelle roof. Thereby, the nacelle roof 6 comprises around 10 panels. Advantageously, the number of panels 34 of the self-supported roof 7 may be between 5 and 12. It is therefore apparent that the number of panels 34 should be lower than 30, in particular lower than 20, more particularly lower than 15.

All inner roof panels 61-66 extend in the transversal direction Y. The respective inner roof panels 61-66 therefore have a greater width along the transversal direction Y than a length along the longitudinal direction X. This configuration provides an exceptionally strong and sturdy self supported nacelle roof 7.

The inner roof panels 61-66 extend over the inner/central area of the nacelle roof 7 and are supported on both lateral sides on the outer lateral roof panels 43.

Accordingly, the inner roof panels 61-66 are arranged one-after-the-other along the longitudinal direction. That is, the first inner roof panel 61 is closest to the rotor 3 of the wind driven power plant 1, the sixth inner roof panel 66 is furthest from the rotor 3.

The first 61, second 62 and third inner roof panel 63 have a greater width along the transversal direction than the fourth 64, fifth 65 and sixth inner roof panel 66.

Inner roof panels 61, 63 in a front area (closer to the rotor 3) comprise lifting hatches 49 that are configured to provide a passageway for lifting gears to be connected to the inner support frame of the nacelle 2.

The lifting hatches 49 are arranged in the corners of an imaginary rectangle/square that extends along the longitudinal direction X. Two lifting hatches 49 are arranged along the transverse direction Y in the first (foremost) inner roof panel 61. Two more lifting hatches 49 are arranged along the transverse direction Y in the third inner roof panel 63, The distance between a lifting hatch 49 in the first inner roof panel 61 and a lifting hatch 49 in the third inner roof panel 63 is substantially comparable to the distance between the two lifting hatches 49 in the first inner roof panel 61. The lifting hatches 49 comprise hatch covers which are hinged on central sides of the lifting hatches facing a longitudinal centerline of the nacelle roof 7. The hatch covers have an opening angle of more than 90°, in particular 120° or more.

Inner roof panels 64, 65 in a rear area (closer to the rear end of the nacelle 2) comprise platform supports 52 for supporting a (helicopter hoisting) platform 8. A fourth inner roof panel 64 comprises two platform supports 52 arranged along the transversal direction Y. A fifth inner roof panel 65 comprises a platform support 52 arranged in a first lateral region of the inner roof panel.

The fifth inner roof panel 65 in the rear area further comprises a supply/service hatch 54 that is configured for lifting in and/or hauling out supplies and tools for maintenance and installation work. The service hatch is arranged in a second lateral rear region of the inner roof panel 65.Accordingly, the fifth inner roof panel 65 comprises the platform support 52 and the service hatch 54 arranged along the transverse direction Y.

The fourth inner roof panel 64 is closer to the rotor 3 of the wind driven power plant 1 than the fifth inner roof panel 65.

The outer rear roof panel 45 comprises an access hatch 50 configured for maintenance personnel to enter/exit the nacelle through the access hatch 50.

The outer rear roof panel 45 comprises two frontal and two lateral platform supports.

The access hatch 50 is arranged in a central portion of the outer rear roof panel 45. The access hatch has an elongated substantially rectangular shape that is arranged in the transversal direction. In other words: The long side of the access hatch 50 extends from lateral side to lateral side of the nacelle (in Y direction). This aspect provides enough head room to install a staircase instead of a ladder in the access hatch.

The platform supports 52 of the outer rear roof panel 45 are arranged along the frontal and lateral sides of access hatch 50.

FIG. 16 shows a simplified perspective view of a second embodiment of a multifunctional nacelle roof 7. The inner roof panels 61-67 are configurable to provide a first opening in the nacelle roof 7, the opening having a first size and shape suitable for inserting/removing a complete drive train 31 of the wind driven power plant 1 and a second opening having a second size and shape suitable for inserting/removing a generator 30 of the wind driven power plant.

The nacelle roof 7 is considered to be self-supported by the lateral nacelle side walls 9, 10, the nacelle rear wall 12 and/or the support frame. Accordingly, the nacelle roof 7 is only supported along sections of its outer (lower) circumference. Therefore, the nacelle roof 7 is unsupported by the support frame in a central area.

Basically, the nacelle roof 7 comprises four outer roof panels (two outer lateral roof panels 43, one outer front roof panel 44, and one outer rear roof panel 45). The outer roof panels are supported by the lateral nacelle side walls 9, 10 and the nacelle rear wall 12.

The nacelle roof 7 comprises seven inner roof panels 61-67 in a central/inner area of the nacelle roof. Thereby, the nacelle roof 6 comprises around 11 panels 34. Advantageously, the number of panels 34 of the self-supported roof 7 may be between 5 and 12. It is therefore apparent that the number of panels 34 should be lower than 30, in particular lower than 20, more particularly lower than 15.

Inner roof panels 64-67 extend in the transversal direction Y. The respective inner roof panels 64-67 therefore have a greater width along the transversal direction Y than a length along the longitudinal direction X. This configuration provides an exceptionally strong and sturdy self supported nacelle roof 7.

The inner roof panels 64-67 extend over the inner/central area of the nacelle roof 7 and are supported on both lateral sides on the outer lateral roof panels 43.

Accordingly, the inner roof panels 64-67 are arranged one-after-the-other along the longitudinal direction.

Inner roof panels 61-63 extend in the longitudinal direction X. The respective inner roof panels 61-63 therefore have a smaller width along the transversal direction Y than a length along the longitudinal direction X. This configuration provides easy access for the lifting gears.

The first 61, second 62 and third inner roof panel 63 are arranged along the transverse direction Y in a one-besides-the-other configuration.

The first to third inner roof panels 61-63 are closest to the rotor 3 of the wind driven power plant 1. The seventh inner roof panel 67 is furthest from the rotor 3.

The first to fourth inner roof panels 61-64 have a greater width along the transversal direction than the fifth to seventh inner roof panel 65-67.

Lateral inner roof panels 61, 63 in a front area (closer to the rotor 3) form lifting hatches 49 that are configured to provide a passageway for lifting gears to be connected to the inner support frame of the nacelle 2.

The first and third lateral inner roof panels 61, 63 are hinged on lateral sides and have an opening angle of more than 90°, in particular 120° or more. The second (central) inner roof panel 62 provides stability (in particular if the lifting hatched 49 are open) by connecting the outer front roof panel 44 to the fourth inner roof panel 64.

The sixth inner roof panel 66 in the rear area further comprises a supply/service hatch 54 that is configured for lifting in and/or hauling out supplies and tools for maintenance and installation work. The service hatch is arranged in a lateral rear region of the inner roof panel 66.

The outer lateral roof panels 43 each comprise, in a rear region, two platform supports 52 for supporting a helicopter hoisting platform 8.

The outer rear roof panel 45 comprises two central platform supports 52 and two lateral access hatches 50 configured for maintenance personnel to enter/exit the nacelle through the access hatches 50. The access hatches 50 have a substantially square shape.

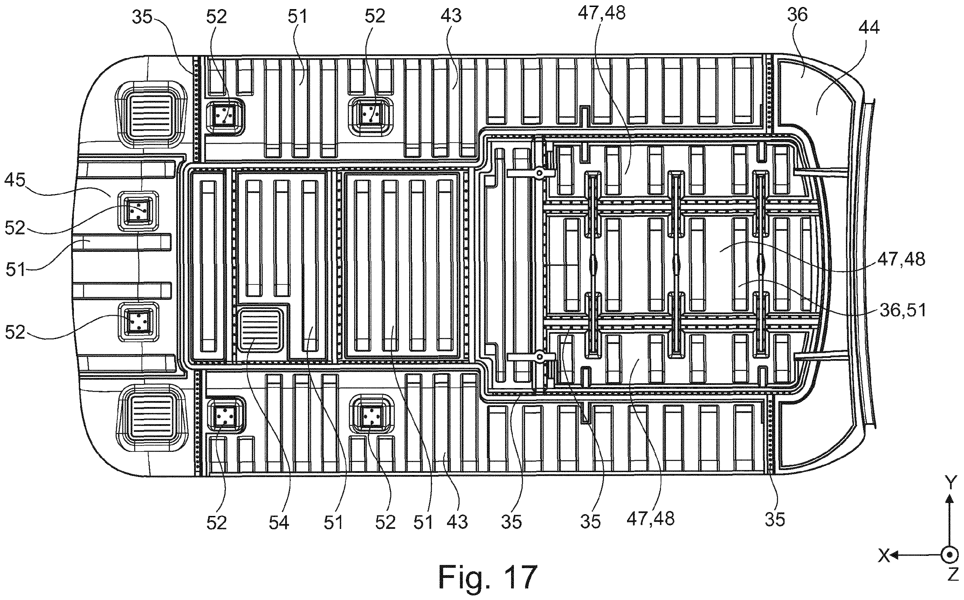

FIG. 17 shows a simplified bottom view of another embodiment of a nacelle roof 7. At least one panel 34 of the self-supported nacelle roof 7 is reinforced by at least one rib 51. Apparently, all roof panels 34 but the outer front roof panel 44 comprise ribs. The outer front roof panel 44 still comprises a reinforced foam core structure, i.e. a global core. The ribs are an integral part of the panels 34. A first plurality 48 of inner roof panels 47 extends in the longitudinal direction X. The first plurality 48 can be located closer to the hub 4 of the nacelle 2 than to the rear of the nacelle 2. The outer (lateral) two of the first plurality 48 of inner roof panels 47 can be unfastened by service personnel and subsequently opened by linear drives.

The outer lateral roof panels 43 and the outer rear roof panel 45 further comprise platform supports 52.

A helicopter hoisting platform 8 is supported on the platform supports 52.

The outer rear roof panel 45 further comprises access hatches 50. An inner roof panel 47 on the back side of the nacelle roof 7 comprises a supply hatch.

If the number of ribs is to be reduced, one or more panels of the roof of the nacelle are advantageously configured to extend from one lateral side to the other lateral side (i.e. for example from the first upper lateral longitudinal beam to the second upper lateral longitudinal beam). The length of the panel(s) in the transversal direction may then be greater than the width of the panel(s) in longitudinal direction. This configuration can advantageously apply to panels close to the hub of the nacelle (panels in the front section of the roof of the nacelle). In other words, connection lines between adjacent panels are advantageously arranged in a transversal direction rather than in longitudinal direction, at least in the front region of the nacelle roof. According to this aspect of the invention, it has been found out that it is more advantageous to arrange the panels such that they extend from lateral side to lateral side and are shorter in longitudinal direction than in transversal direction rather than extending in longitudinal direction. This allows reducing the number of ribs or even not using ribs at all.

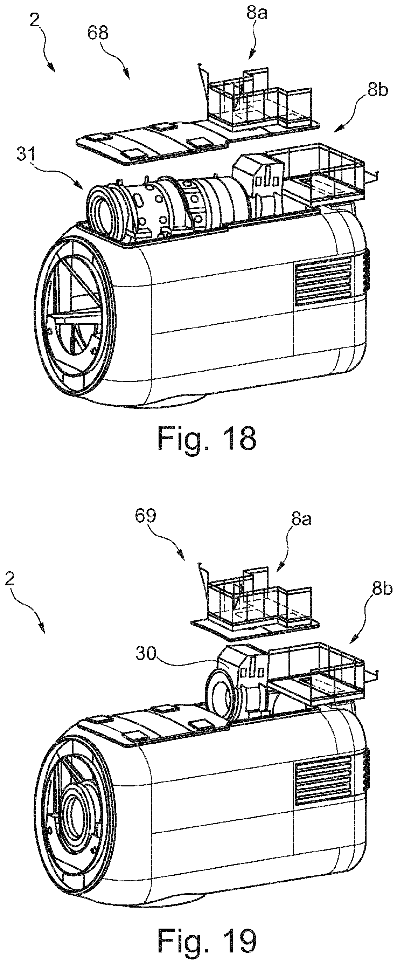

FIG. 18 shows a simplified perspective view of a nacelle 2 in a first configuration.

A predefined first plurality of inner roof panels 61-66 is configured to be detached from remaining parts 43-45 of the nacelle roof 7 to provide the first opening. The first plurality substantially comprises all inner roof panels 61-66. The detachable inner roof panels form a first opening cover 68 corresponding to the first opening. However, flange connections at the circumference of the first opening cover 68 have to be opened beforehand.

The helicopter hoisting platform 8 or parts of the helicopter hoisting platform 8a can be attached to the first opening cover 68.

A lifting frame is connected to lifting eyes on the surface of the opening cover 68. The first opening cover 68 together with the attached (part of the) helicopter hoisting platform 8 can be removed together (in one lift).

After removal of the first opening cover 68, the drive train 31 of the wind driven power plant can be removed from / inserted into the nacelle 2 in one piece.

FIG. 19 shows a simplified perspective view of the nacelle 2 in a second configuration.

A predefined second plurality of inner roof panels 64-66 are configured to be detached from remaining parts of the nacelle roof 7 to provide the second opening. The second plurality is arranged in a rear region of the nacelle roof. In the present embodiment, the second plurality comprises the fourth to sixth inner roof panel 64-66.

The first plurality of inner roof panels 61-66 therefore comprises the second plurality of inner roof panels 64-66.

The detachable inner roof panels form a second opening cover 69 corresponding to the second opening. Flange connections at the circumference of the second opening cover 69 have to be opened before removing the second opening cover.

The helicopter hoisting platform 8 or parts of the helicopter hoisting platform 8a can be attached to the second opening cover 69.

A lifting frame is connected to lifting eyes on the surface of the opening cover 69. The second opening cover 69 together with the attached (part of the) helicopter hoisting platform 8 can be removed together (in one lift).

After removal of the second opening cover 69, the generator of the wind driven power plant can be removed from / inserted into the nacelle 2.

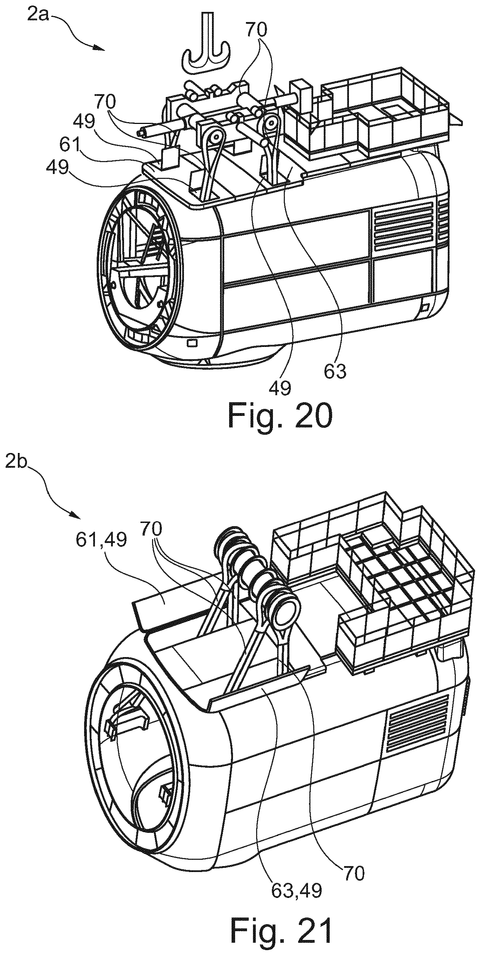

FIG. 20 and FIG. 21 show simplified perspective views of two slightly different nacelles 2 in a lifting configuration.

The first and third inner roof panels 61, 63 comprise or form lifting hatches 49 that are configured for providing a passageway for lifting gears 70 to be connected to the inner support frame of the nacelle 2.

Advantageously, the nacelle roof 7 does not have to be removed for lifting the nacelle 2 onto the nacelle tower 13. This eases installation and shortens precious installation time.

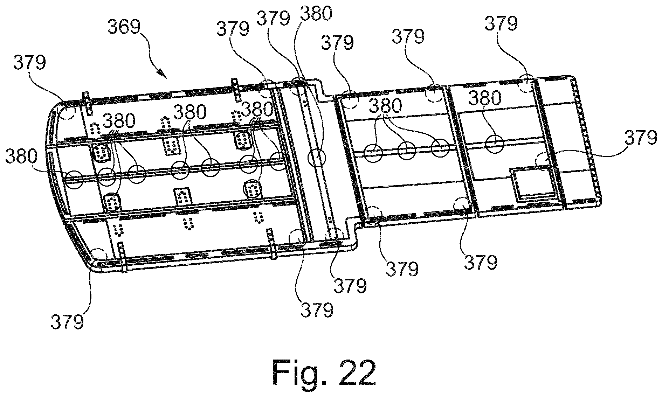

FIG. 22 shows a simplified perspective view of the opening cover 369 of the nacelle roof. The detachable inner roof panels 61-67 form respective opening covers corresponding to the different openings.

Lifting eyes 379 are arranged in a (mostly circumferential) region adjacent to the connection flanges of the opening cover 369. The lifting points are configured to lift the opening cover 379 including the attached part of the helicopter hoisting platform 8.

Lifting points are located in a region of the outer edges of both, the first and the second opening cover. Lifting points are therefore arranged in lateral regions on inner roof panels 61, 63, 64, 65, 66.

Anchor points 380 are arranged in a central region, particularly on/near a centerline extending in the longitudinal direction of the opening cover. The anchor points 380 are capable to securely hold and retain a coupled load of minimum 22.2 kN, for example resulting from personal protective equipment and/or in the case of rescue.

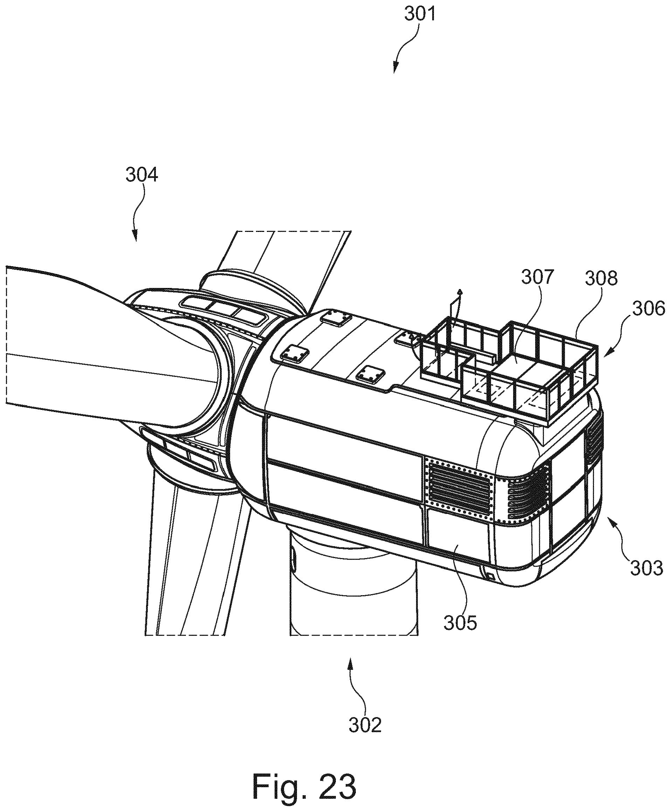

FIG. 23 is a simplified perspective view of a wind turbine or wind driven power plant 301. The wind driven power plant 301 comprises a tower 302, a nacelle 303, and a rotor 304. The nacelle 303 extends in a vertical direction, which is substantially parallel to the axial extension of a supporting structure, in particular a tower 302 on which the nacelle 303 can be mounted. The nacelle 303 comprises a nacelle cover 305 and a helicopter hoisting platform 306 which comprises further a winching area 307 and a handrail 308.

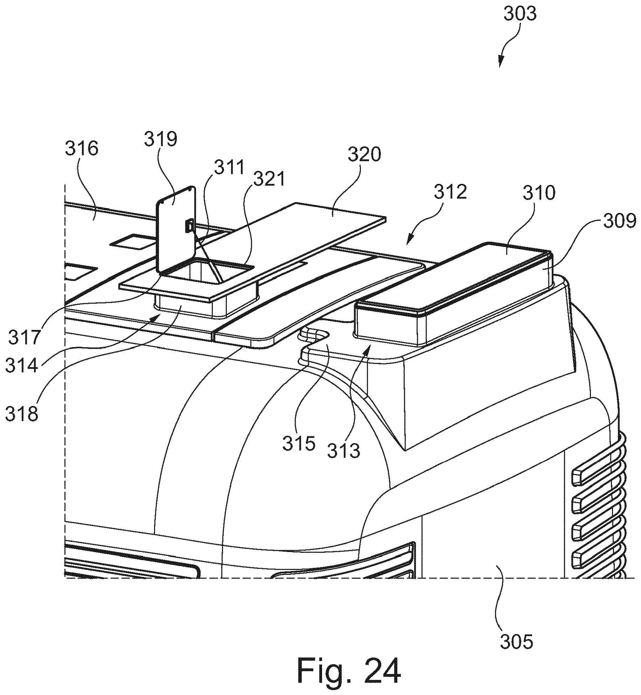

FIG. 24 is a simplified perspective view of two separate hatches 313, 314 which are positioned in the rear part of the roof 312 of the nacelle 303.

For the present embodiment, the roof 312 is divided into separate sections 315, 316. However, the roof may also be a one-piece-element. The hatches 313, 314 comprise in general a similar setup, except that the sizes of the hatches 313, 314 are different from each other for the present embodiment. The details of the hatches will be explained referring to the one or the other hatch but they are valid correspondingly.

The hatch 313 comprises a hatch extension 39 and a hatch cover 310. The hatch extension 309 is mounted to the roof section 315. The hatch extension 309 has a channel-like shape with two open ends. At the top end the hatch cover is mounted to the hatch extension 309. The lower end of the channel-like hatch extension 309 coincides with an opening (not shown) inside the roof section 315. The hatch extension 309 provides a distance between the roof section 315 of the nacelle cover and the hatch cover 310.

The hatch 314 comprises a hatch extension 318 and a hatch cover 317. The hatch extension 318 is mounted to a different roof section 316. The hatch is shown in opened position. The hatch cover 319 is mounted by means of hinges 317 to the hatch extension 318. The hatch cover 319 is additionally equipped with a linear drive 311 which is configured to keep the hatch cover 319 in specific positions, e.g. in an opened position.

The winching area of the helicopter hoisting platform is indicated in FIG. 24 by a single winching area element 320. The winching area element 320 comprises a cut-out 321. The hatch 314 is configured to fit this cut-out 321 with respect to two aspects. Firstly, the hatch cover 319 is configured to substantially fit the cut-out 321 of the winching area element 320 with respect to the dimensions within the top surface of the winching area element 320. Secondly, the length of the hatch extension 318 is configured such, that the top surface of the hatch cover 319 is substantially flush with the top surface of the winching area element 320 if the hatch cover 319 is in closed position. If the hatch cover 319 is in closed position, there is no significant gap between the top surface of the hatch cover 319 and the top surface of the winching area element 320 with respect to both lateral and vertical distances.

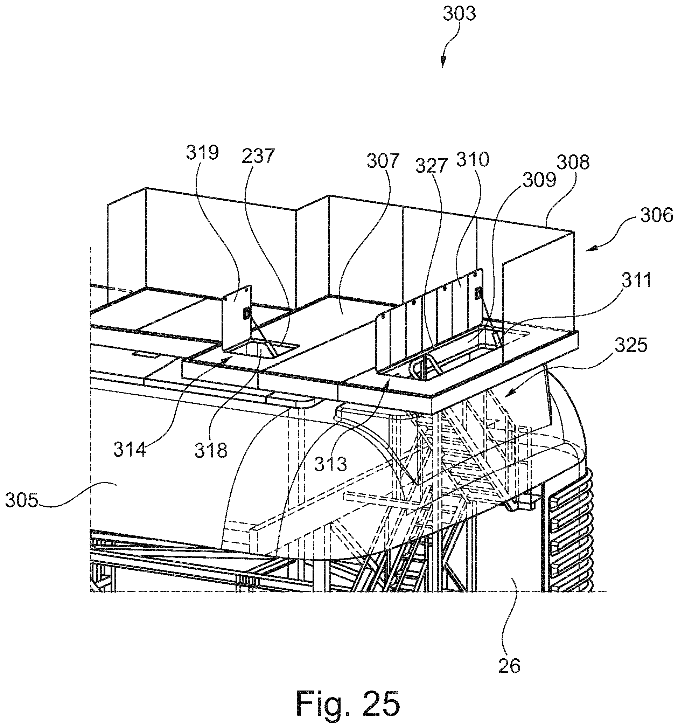

FIG. 25 is a simplified perspective view of two separate hatches 313, 314 and the winching area 307 of the helicopter hoisting platform 306 with a partially skipped handrail 308 and a partially skipped nacelle cover 305.

The hatch covers 310, 319 are integrated parts of the winching area 307 of the helicopter hoisting platform 306. The hatch covers 310, 319 are valid walkable surfaces proceeding the walkable surface of the winching area 307 of the helicopter hoisting platform 306. To reduce hazards of slipping the top surfaces of the hatch covers 310, 319 are equipped with an anti-slide-plating. Although the hatch covers 310, 319 are integrated parts of the winching area 307, the winching area 307 and the helicopter hoisting platform 306 are floating with respect to the hatches 313, 314. That means there are small slits between the hatch covers 310, 319 and the winching area 307. These slits are so small that they do not disadvantageously influence the walkability of the winching area 307 and the hatch covers 310, 319. The floating aspect allows the hatches 313, 314 and the helicopter hoisting platform 306 to be decoupled from each other. The hatches 313, 314 and the helicopter hoisting platform 306 may independently vibrate or expand / shrink from each other dependent on vibrations or temperature variations. The hatches 313, 314 allow access to the interior space 326 of the nacelle 303. The hatches 313, 314 comprise different dimensions because they serve different functions. For instance, the hatch 313 is configured to provide access to a stairway 325 as an entrance to the interior space 326 of the nacelle 303. The integration of the hatch covers 310, 319 into the winching area 307 allows access to the interior space 326 of the nacelle 303 without the need for leaving the restricted area (secured area) of the helicopter hoisting platform 306 determined by the handrail 308.

Between the hatch extensions 309, 318 and the hatch covers 310, 319 a sealing 327 is provided. The sealing is configured to seal the interior space 326 of the nacelle 303 with respect to water and air if the hatch covers 310, 319 are in closed positions. When the hatch covers 310, 319 are in closed positions, thenacelle is protected against environmental influences.

The hatch covers 310, 319 can not only be opened from the winching area 307, i.e. from an exterior space of the nacelle, but also from the interior space 326 of the nacelle 303. This means a person can open the hatch cover 10, enter the interior space 326 of the nacelle 303, close the hatch cover 310 in order to protect the interior space 326 against environmental influences, and then open the hatch cover 310 again in order to leave the nacelle 303.

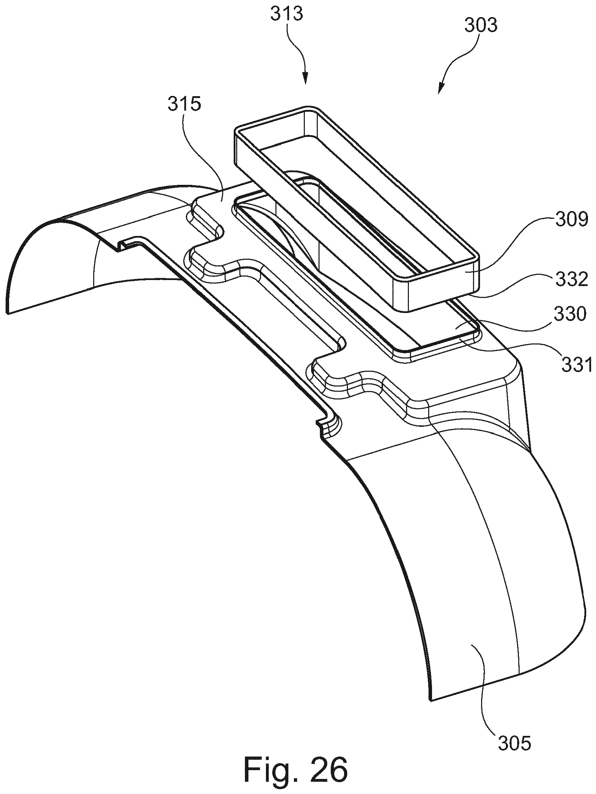

FIG. 26 is a simplified view on an exploded view of a roof section 315 of the nacelle 303 and a hatch extension 309. The hatch 313 is only partially represented by the hatch extension 309 while the hatch cover of the hatch 313 is not shown. The roof section 315 comprises an opening 330 and a provision flange 331 which surrounds the opening 330. The provision flange 331 is integral to the roof section 315 of the nacelle cover 305. The hatch extension 309 is configured as an adapter which comprises an adapter flange 332 at the lower end of its channel-like shape. The adapter flange 332 is integral to the hatch extension 309. The hatch extension 309 is configured to be mounted by joining the provision flange 331 of the roof section 315 of the nacelle cover 305 with the adapter flange 332 of the hatch extension 309. In this and other embodiments and for the aspects of the invention, the provision flange 331 and the adapter flange 332 correspond to each other so as to form a common flange connection.

The flanges of the provision flange 331 and the adapter flange 331 overlap each other in the same plane as the hatch extension 309 or roof section 315 to which they belong. This configuration is referred to as planar overlapping flange connection.

The nacelle cover 305 can also comprise a plurality of panels. The provision flange 331 can then be integral to one of the panels of the nacelle cover 305.

The hatch extension 309 can be integral to the nacelle cover 305 or one of the panels of the nacelle cover 305. The planar overlapping flange connection between the provision flange 331 and the adapter flange 332 of the hatch extension 309 would then be avoided.

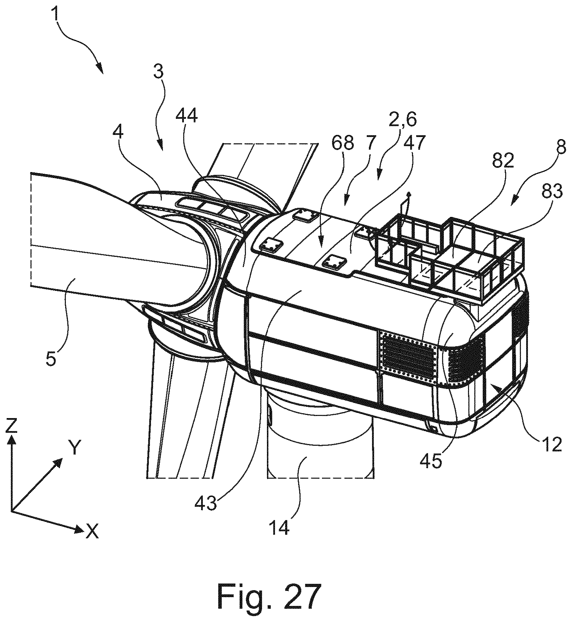

FIG. 27 shows a simplified perspective view of a wind driven power plant 1 comprising a helicopter hoisting platform 8. The wind driven power plant 1 comprises a nacelle 2 and a rotor 3 having a hub 4 and rotor blades 5. The nacelle 2 extends in a vertical direction Z, which is substantially parallel to the axial extension of a supporting structure, in particular a tower 14 on which the nacelle 2 can be mounted. The nacelle 2 also extends in a horizontal plane defined by a longitudinal direction X, which is substantially parallel to a drive train to be located in the nacelle, and a transversal direction Y. The longitudinal direction X and the transversal direction Y are both perpendicular to the vertical direction Z and to each other.

A helicopter hoisting platform 8 for a nacelle 2 of a wind driven power plant 1 is supported on a rear end of the nacelle 2.

The helicopter hoisting platform 8 comprises a detachable portion 82 that is configured to be detached and removed from a permanent portion 83 of the helicopter hoisting platform 8.

A detachable portion 82 of the helicopter hoisting platform 8 is mounted on top of access hatches / nacelle roof openings 68.

The helicopter hoisting platform 8 is supported on the nacelle roof 7 in an overlapping configuration such that the helicopter hoisting platform 8 (or rather the detachable portion 82 of the helicopter hoisting platform 8) overlaps an opening cover 68 and/or an opening in the roof 7 of the nacelle 2.

The helicopter hoisting platform 8 is positioned at the minimum allowed distance between the centre of the winching area 84 and the rotor blade 5 trailing edge. In this position the detachable portion of the helicopter hoisting platform 8 is overlapping with the rooftop opening 68 and can be removed when needed.

A helicopter hoisting platform 8 having a removable portion 82 can be mounted on the nacelle 2 at the minimum allowed distance from the trailing edge of the rotor blade 5.

The helicopter hoisting platform 8 substantially ends flush with the rear wall 12 of the nacelle 2. Reducing the overall length of component groupings that are transported together further saves costly space on a ship.

Parts of the helicopter hoisting platform 8, which are projecting behind the rear wall 12 the nacelle 2 are therefore limited. This avoids unwanted cantilever reactions, which would result in a need for bigger / sturdier and heavier support elements.

Technical staff and material can be hoisted onto the hoisting platform 8 from a helicopter.

The nacelle roof 7 of the nacelle 2 comprises a plurality of panels 43-45, 47 made of a composite. The panels 43-45, 47 are connected to each other by means of connection flanges. The panels are configurable to provide openings of different sizes and shapes to the nacelle 2 by detaching and removing one or more inner roof panels 47.

The term "detachable" in this context should be understood to describe panels and roof sections (which are distinct combinations of connected panels) that can be fully detached from the remaining part (e.g. the outer roof panels 43- 45) of the nacelle 2 in an easy and convenient way. As such, removable and detachable panels 47 and/or center roof sections are configured to be physically lifted away from the nacelle 2, e.g. by a lifter, crane or helicopter and placed at ground level, e.g. on the ground surface or a jack-up barge. Sliding or revolving panels or roof sections which are not conceived to be easily and conveniently fully detachable from the nacelle 2 are therefore not considered to be removable and detachable within the meaning of this description.

In other words, a detachable connection is designed for recurring engagement and disconnection. The detachable connection is not constructed for single-time and/or permanent (or at least long lasting) engagement.

A permanent connection, on the other hand, is designed for single-time and/or permanent (or at least long lasting) engagement. Stated differently, the permanent connection is not constructed for a recurring engagement and disconnection.

For example, a welded connection is obviously considered to be a permanent connection.

A screwed connection, however, can be considered to form a detachable connection as well as a permanent connection, depending on the configuration and the intended purpose.

A screwed connection secured by a safety cotter pin, for example, may be designed for easy and convenient detachment (and reattachment). The same applies to a screwed connection comprising a low-strength liquid bolt retaining compound (such as *"Loctite 221", "Loctite* 222" or comparable), which may be reapplied after every detachment.

A screwed connection comprising a medium-strength liquid bolt retaining compound (such as *"Loctite* 243" or comparable) or a high-strength liquid bolt retaining compound (such as *"Loctite 270", "Loctite 276"* or comparable), however, forms a permanent connection, even if such a connection can still be detached, for example by using solvents, a heat treatment, or special tools.

The nacelle cover 6 protects the drive train 31 and other internal components of the wind power installation 1 from harsh environmental conditions and in particular moisture.

The nacelle 2 comprises an support frame 15. The nacelle cover 6 is coupled to the support frame 15, particularly in lateral regions of the nacelle 2. The nacelle roof 7 is self-supported. This means that the self-supported nacelle roof 7 extends, while being unsupported by the support frame 15, at least in a center section of the roof 7 (comprising the inner roof panels 47) from a first lateral side of the nacelle 2 to a second lateral side of the nacelle 2.

A top section of the framework structure is kept free of transversal and/or longitudinal beams in order to provide an upper passageway for insertion, removal and replacement of components. No intermediate beams or truss members project over the drive train. The main shaft assembly 29, the gear box 28, and/or the generator 30 can be inserted into the nacelle 2 or removed from the nacelle 2 via the opening in the roof 7 and the upper passageway in a top section of the framework structure if the detachable roof panels and the detachable portion 82 of the helicopter hoisting platform are detached and removed in accordance with the aspects of the present invention.

The composite cover 6 of the nacelle 2 is configured and reinforced to support the helicopter hoisting platform 8 with the minimum necessary interconnections. The nacelle cover 6 is self-supporting the helicopter hoisting platform 8, therefore abandons the need for an additional underlying support structure 15.

The composite can be a fiber reinforced polymer. In particular, the fiber reinforced polymer can be a glass fiber reinforced polymer (GFRP). A glass fiber reinforced polymer, also known as "Fiberglass" or "fiberglass" is a type of fiber- reinforced plastic where the reinforcement fiber is specifically glass fiber. The glass fiber may be randomly arranged, flattened into a sheet (called a chopped strand mat), or woven into a fabric. The polymer matrix may be a thermoset polymer matrix, most often based on thermosetting polymers such as epoxy, polyester resin, or vinylester, or a thermoplastic. The glass fibers are made of various types of glass depending upon the fiberglass use. These glasses all contain silica or silicate, with varying amounts of oxides of calcium, magnesium, and sometimes boron. Other common names for fiberglass are glass-reinforced plastic (GRP), glass-fiber reinforced plastic (GFRP) or GFK (from German: Glasfaserverstärkter Kunststoff). Because glass fiber itself is sometimes referred to as "fiberglass", the composite is also called "fiberglass reinforced plastic." The present description also uses the term "composite" for GFRP or GRP. This aspect reduces the overall weight of the nacelle.

A wind park can comprise a plurality of the depicted wind driven power plants 1 comprising the nacelle 2 having a helicopter hoisting platform 8 according to aspects and embodiments of the invention.

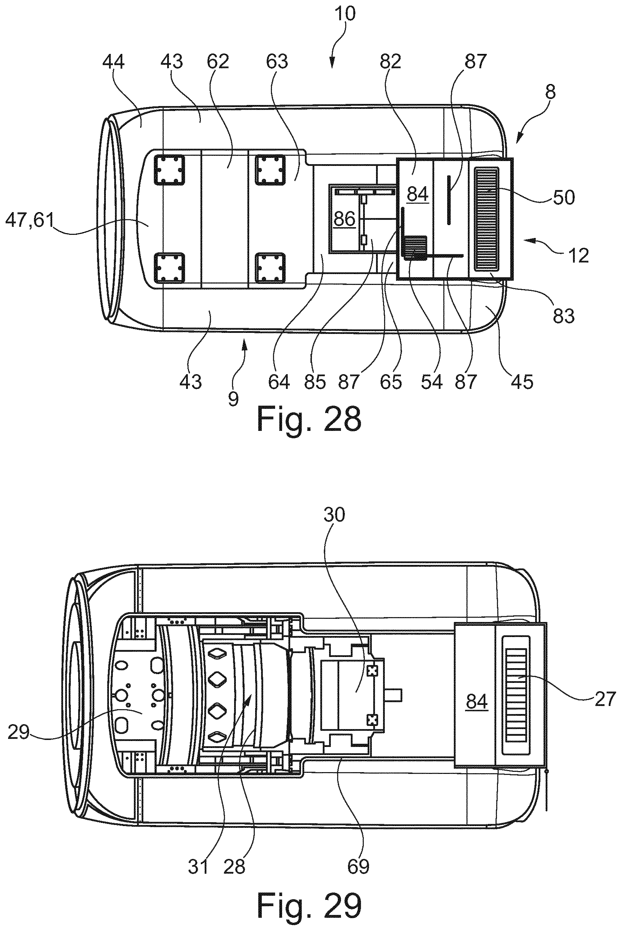

FIG. 28 shows a simplified top view of a nacelle 2 from above, comprising a first embodiment of the helicopter hoisting platform 8.

The detachable portion 82 and the permanent portion 83 cooperatively form a winching area 84 (also known as clear area) of the helicopter hoisting platform 8.

The permanent portion 83 of the winching area 84 needs not to be removed before opening the nacelle roof 7.

The detachable portion 82 of the helicopter hoisting platform 8 comprises an access route area 85 and a safety zone area 86. The winching area 84 (colored yellow), the access route area 85 (colored grey/black) and the safety zone area (colored green) are marked by different and contrasting colors.

The helicopter hoisting platform 8 comprises an access hatch 50 in the winching area 84.

The helicopter hoisting platform 8 further comprises a supply hatch 54 in the winching area 84.

Tuck away deck cranes 87 can be detached and removed from the winching area 84. The tuck away deck cranes 87 are stored inside the nacelle 2, when not in use.

The inner roof panels 61-66 are configurable to provide a opening in the nacelle roof 7, the opening having a size and shape suitable for inserting/removing a complete drive train 31 of the wind driven power plant 1 (compare FIG. 2c).

The nacelle roof 7 is considered to be self-supported and supported by the lateral nacelle side walls 9, 10, the nacelle rear wall 12 and/or the support frame 15. Accordingly, the nacelle roof 7 is only supported along sections of its outer (lower) circumference. Therefore, the nacelle roof 7 is unsupported by the support frame 15 in a central area.

Basically, the nacelle roof 7 comprises four outer roof panels (two outer lateral roof panels 43, one outer front roof panel 44, and one outer rear roof panel 45). The outer roof panels are supported by the lateral nacelle side walls 9, 10 and the nacelle rear wall 12.

The nacelle roof 7 comprises six inner roof panels 61-66 in a central/inner area of the nacelle roof. All inner roof panels 61-66 extend in the transversal direction Y. The respective inner roof panels 61-66 therefore have a greater width along the transversal direction Y than a length along the longitudinal direction X. This configuration provides an exceptionally strong and sturdy self supported nacelle roof 7. The inner roof panels 61-66 extend over the inner/central area of the nacelle roof 7 and are supported on both lateral sides on the outer lateral roof panels 43.

Accordingly, the inner roof panels 61-66 are arranged one-after-the-other along the longitudinal direction. That is, the first inner roof panel 61 is closest to the rotor 3 of the wind driven power plant 1, the sixth inner roof panel 66 is furthest from the rotor 3.

Inner roof panels 64, 65 in a rear area (closer to the rear end of the nacelle 2) comprise platform supports 52 for supporting the helicopter hoisting platform 8. A fourth inner roof panel 64 comprises two platform supports 52' arranged along the transversal direction Y. A fifth inner roof panel 65 comprises a platform support 52' arranged in a first lateral region of the inner roof panel.

The fifth inner roof panel 65 in the rear area further comprises a supply/service hatch 54 that is configured for lifting in and/or hauling out supplies and tools for maintenance and installation work. The service hatch is arranged in a second lateral rear region of the inner roof panel 65.

Accordingly, the fifth inner roof panel 65 comprises the platform support 52 and the service hatch 54 arranged along the transverse direction Y.

The fourth inner roof panel 64 is closer to the rotor 3 of the wind driven power plant 1 than the fifth inner roof panel 65.

The outer rear roof panel 45 comprises an access hatch 50 configured for maintenance personnel to enter/exit the nacelle through the access hatch 50.

The outer rear roof panel 45 comprises two frontal and two lateral platform supports.

The access hatch 50 is arranged in a central portion of the outer rear roof panel 45. The access hatch has an elongated substantially rectangular shape that is arranged in the transversal direction. In other words: The long side of the access hatch 50 extends from lateral side to lateral side of the nacelle (in Y direction). This aspect provides enough head room to install a staircase instead of a ladder in the access hatch.

The platform supports 52 of the outer rear roof panel 45 are arranged along the frontal and lateral sides of access hatch 50.

FIG. 29 shows a simplified top view the nacelle 2, having a detachable part 68 of the nacelle roof 7 and a detachable portion 82 of the helicopter hoisting platform 8 removed. The whole drive train 31 comprising a main shaft assembly 29, a planetary gearbox 28, and a generator 30 can be removed and/or inserted through the opening 69.

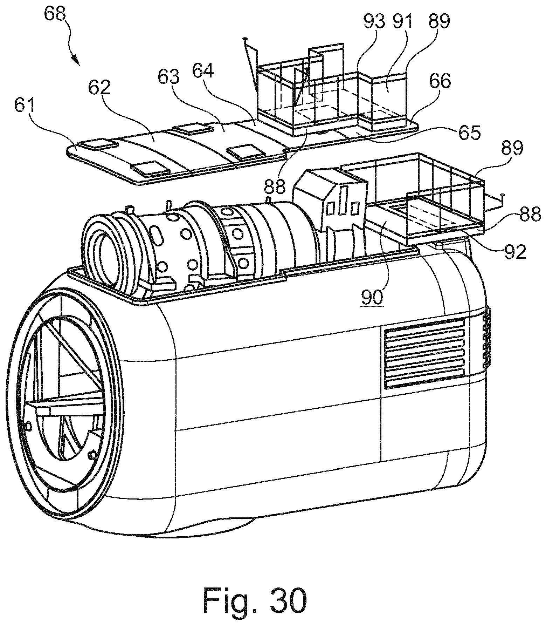

FIG. 30 shows a simplified perspective view of the nacelle, having the detachable part 68 of the nacelle roof 7 and the detachable portion 82 of the helicopter hoisting platform 8 removed.

The nacelle 2 comprises an opening 69 that can be closed by a removable opening cover 68. The removable opening cover 68 and the detachable portion 82 of the helicopter hoisting platform 8 are configured to provide an open space when detached and/or removed. The open space may particularly be defined by the shape and size of the opening 69. The open space can be adapted for inserting/removing a generator 30 or a complete drive train 31 of the wind driven power plant 1. In other words: The detachable portion of the helicopter hoisting platform 8 can be removed to allow the extraction of parts 28- 30 or the complete drive train 31 through a rooftop opening 69.

The detachable portion 82 and the permanent portion 83 of the helicopter hoisting platform 8 each comprise a girder frame 88, a railing fence 89 and/or a grating floor 90.

The helicopter hoisting platform 8 comprises an aluminum and/or composite structure. The girder frame 88, the railing 93 and fence support elements 92 comprise extruded profiles. The fence panels 91 comprise aluminum perforated sheets and/or moulded fibreglass. The walkable flooring comprises an aluminum or moulded fibreglass grating.

The detachable portion 82 is permanently connected to one or more detachable roof panels 47, 61-66 of the nacelle. Stated differently, the removable section of the helicopter hoisting platform is interconnected with the removable panels 47, 61-66 of the roof 7, such that the opening cover 68 and the detachable portion of the helicopter hoisting platform 82 can be removed together in one lift.

For removing the detachable panels 47, 61-66 and the detachable portion 82 of the helicopter hoisting platform, only the (detachable) bolts attaching the detachable portion of the helicopter hoisting platform to the permanent portion of the helicopter hoisting platform, need to be removed.

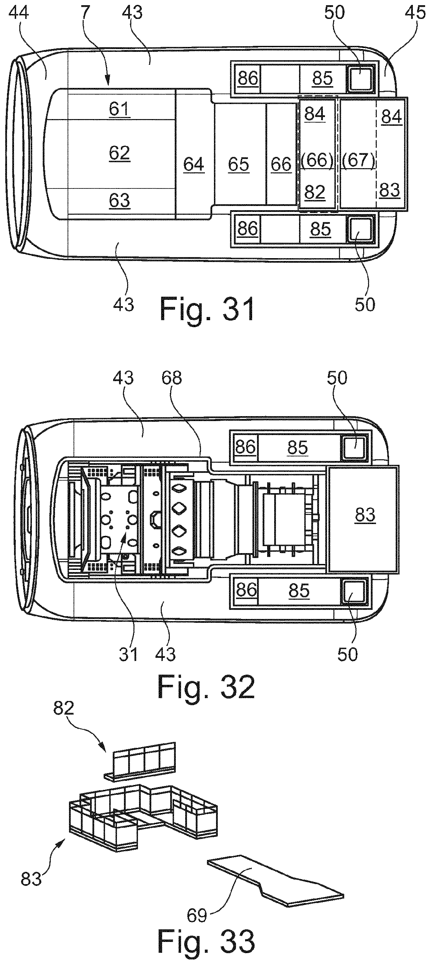

FIG. 31 shows a simplified top view of a nacelle comprising a second embodiment of the helicopter hoisting platform.

The permanent portion 83, however, comprises the access route area 85 and/or the safety zone area 86.

The helicopter hoisting platform 8 also comprises two access hatches in the access route area 85.

The inner roof panels 61-67 of the nacelle roof 7 are configurable to provide a opening in the nacelle roof 7. The opening has a size and shape suitable for inserting/removing the complete drive train 31 of the wind driven power plant 1.

The nacelle roof 7 is considered to be self-supported by the lateral nacelle side walls 9, 10, the nacelle rear wall 12 and/or the support frame. Accordingly, the nacelle roof 7 is only supported along sections of its outer (lower) circumference. Therefore, the nacelle roof 7 is unsupported by the support frame in a central area.

Basically, the nacelle roof 7 comprises four outer roof panels (two outer lateral roof panels 43, one outer front roof panel 44, and one outer rear roof panel 45). The outer roof panels are supported by the lateral nacelle side walls 9, 10 and the nacelle rear wall 12.

The nacelle roof 7 comprises seven inner roof panels 61-67 in a central/inner area of the nacelle roof.

Inner roof panels 64-67 extend in the transversal direction Y. The inner roof panels 64-67 extend over the inner/central area of the nacelle roof 7 and are supported on both lateral sides on the outer lateral roof panels 43.

Inner roof panels 61-63 extend in the longitudinal direction X. The first to third inner roof panels 61-63 are closest to the rotor 3 of the wind driven power plant 1. The seventh inner roof panel 67 is furthest from the rotor 3.

The detachable portion 83 of the helicopter hoisting platform 8 overlaps at least the sixth and seventh inner roof panel 66, 67.

The first to fourth inner roof panels 61-64 have a greater width along the transversal direction than the fifth to seventh inner roof panel 65-67.

The sixth inner roof panel 66 in the rear area further comprises a supply/service hatch 54 that is configured for lifting in and/or hauling out supplies and tools for maintenance and installation work. The service hatch is arranged in a lateral rear region of the inner roof panel 66.

The grating 90 of the helicopter hoisting platform 8 has to be removed above the service hatch 54 in order to open the hatch.

The outer lateral roof panels 43 each comprise, in a rear region, two platform supports 52 for supporting a helicopter hoisting platform 8.

The outer rear roof panel 45 comprises two central platform supports 52 and two lateral access hatches 50 configured for maintenance personnel to enter/exit the nacelle through the access hatches 50. The access hatches 50 have a substantially square shape.

FIG. 32 and FIG. 33 show simplified top and perspective views of the nacelle 2, having a detachable part 69 of the nacelle roof 7 and a detachable portion 82 of the helicopter hoisting platform removed. FIG. 3c shows a simplified perspective view of the second embodiment of the helicopter hoisting platform.

A rectangular portion of the winching area 84 in between the access route area 85 and the safety zone areas 86 forms the detachable portion of the helicopter hoisting platform 8.

The safety zone area 86 and the access route area 85 are arranged on the outer lateral roof panels 43.

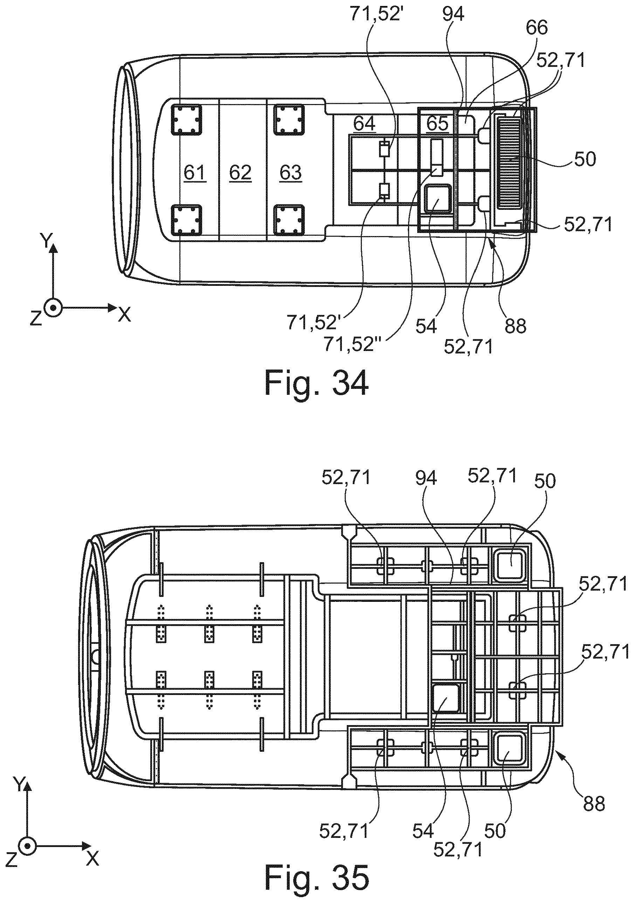

FIG. 34 shows a simplified top view of a girder frame 88 of the first embodiment of the helicopter hoisting platform 8.

The detachable portion 82 is permanently connected to one or more detachable roof panels 64, 65 of the nacelle roof 7 by connection means 71 (platform interfaces).

The detachable portion 82 further comprises connection means 71 (platform interfaces) configured to form a permanent connection with an underlying detachable inner roof panel 64, 65 of the nacelle 2. The permanent connection can, for example, be a riveted connection or a screwed connection.

In other words: The detachable portion of the helicopter hoisting platform is interconnected with the removable panels of the roof 7, such that botch can be removed or reapplied together in one lift.

The permanent portion 83 comprises connection means 71 (platform interfaces) configured to form a permanent connection with an underlying outer rear roof panel 45. The permanent connection can, for example, be a riveted connection or a screwed connection.

The permanent connection is designed for single-time and/or permanent (or at least long lasting) engagement. Stated differently, the permanent connection is not constructed for a recurring engagement and disconnection.

The detachable connection is designed for recurring engagement and disconnection. Stated differently, the detachable connection is not constructed for single-time and/or permanent (or at least long lasting) engagement.

The girder frame 88 comprises frame trusses extending in the longitudinal direction X and frame trusses extending in the transversal direction Y. Differently stated, comprises the girder frame 88 framework segments of rectangular and/or substantially square shape.

The framework segments are configured to surround (i.e. not extend over) the hatches 50, 54.

The detachable portion 82 has three abutments (supports) that are substantially arranged in a triangle spanning large parts of the detachable portion. The permanent portion 83 has four abutments (supports) that are substantially arranged in a rectangular arrangement spanning large parts of the permanent portion. Therefore, both portions are well supported.

The detachable portion 82 and the permanent portion 83 can be connected by a detachable connection, i.e. a screwed connection or in particular a spring catch. However, alternatively, the detachable portion 82 and the permanent portion can be configured to be independent from each other, i.e. not connected.

Therefore, the detachable portion 82 and the permanent portion 83 can be separated or separable at a split line 94.

The size of the helicopter hoisting platform is approximately 15 m².

FIG. 35 shows a simplified top view of a girder frame of the second embodiment of the helicopter hoisting platform.

The detachable portion 82 of the helicopter hoisting platform 8 may solely comprise connection means configured to form a detachable connection with the permanent portion of the helicopter hoisting platform. In other words: The detachable portion of the helicopter hoisting platform 8 is not connected to the detachable and removable opening cover 68.

The permanent portion 83 comprises connection means 71 (platform interfaces) configured to form a permanent connection with underlying outer (lateral and/or rear) roof panels 43, 45. The permanent connection can, for example, be a riveted connection or a screwed connection.

The girder frame 88 comprises frame trusses extending in the longitudinal direction X and frame trusses extending in the transversal direction Y. Differently stated, comprises the girder frame 88 framework segments of rectangular and/or substantially square shape.

The framework segments are configured to surround (i.e. not extend over) the hatches 50, 54. The grating 90 overlapping the support hatch 54, however, has to be removed before the support hatch becomes accessible.

The permanent portion 83 has two abutments (supports) on each outer lateral roof panel 43 of the nacelle, and two more abutments that are arranged on the outer rear roof panel 45. Accordingly, the abutments are arranged in a rectangular arrangement spanning large parts of the permanent portion.

The detachable portion 82 is, however, not connected to an underlying panel, solely supported by the permanent portion 83.

The detachable portion 82 and the permanent portion 83 therefore have to be coupled by a detachable connection, i.e. a screwed connection.

Therefore, the detachable portion 82 and the permanent portion 83 have to be separable at a split line 94.

The size of the helicopter hoisting platform 8 is approximately 9 m² larger than the first embodiment.

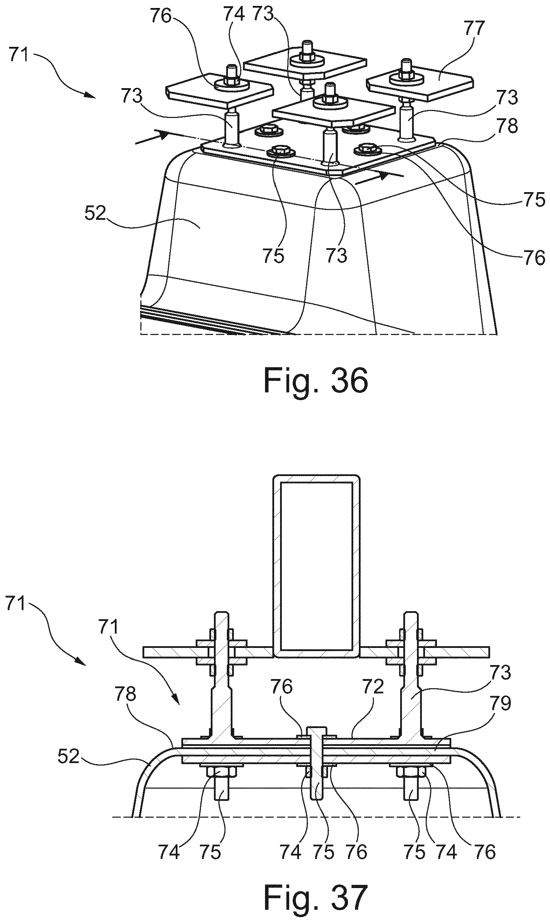

FIG. 36 shows a simplified perspective view of a platform support, and FIG. 37 shows a simplified cross-sectional view of the platform support. Platform interfaces 71 are attached to the platform supports 52 of the nacelle roof 7. The platform interfaces 71 between the helicopter hoisting platform 8 and the nacelle roof 7 are bolted to the girder frames 88. The connections are permanent and require only regular inspection and maintenance.

The outer rear roof panel 45 and/or outer lateral roof panels 43 and/or inner roof panels 64, 65 comprise supports 52 for supporting a helicopter hoisting platform 8. Shown is a platform support 52 that is integral to the outer lateral roof panels 43 of the nacelle roof cover 7. The other platform supports 52, however, have a similar mechanical construction.

The platform supports 52 are portions of the nacelle roof 7, and in particular protruding portions of the outer lateral 43 and/or outer rear roof panels 45 and/or portions of the inner roof panels 64, 65. The platform supports 52 are an integral part of the self-supporting nacelle roof 7.

All platform supports 52 of a nacelle 2 comprise a respective (flat) upper support surface 78. The upper surfaces 78 are arranged in a mutual horizontal plane.

A gasket 79 between the upper support surface 78 and platform interface 71 prevents potential pressure peaks resulting from imperfections in the support surface 78 or the platform interface 71. The gasket 79 also prevents water from leaking into the nacelle 2.

The platform interface 71 comprises a (metallic) base plate 72. The base plate 72 can have a rectangular/square shape. Studs (bolts) 73 are arranged in an outer region of the base plate 72, particularly in the corners of the base plate. The studs 73 can be welded to the base plate 72. Alternatively, base plate 72 and studs 73 can form an integral casting. The studs 73 comprise an upper section (away from the base plate 72) having a reduced diameter (with respect to the lower section of the stud). The upper section of the studs 73 comprises screw threads. A counter plate 81 corresponds to the base plate 72. The base plate 72 and the counter plate 81 clamp (sandwich) the support surface 78 of the support platform 52.

Holes that are arranged in the base plate 72 in-between the studs 73 allow bolt connections being formed with the platform support 52, and more particularly with the counter plate 81. The bolt connections each comprise a bolt 75, washers 76 on both sides, and a nut 74 on the inside of the platform support 52.

The base plate 72 of the platform interface 71 is permanently attached (bolted) to the platform support 52, e.g. by using a liquid bolt retaining compound.

A lower nut 74, an upper nut 74, and metallic washers 76 on each stud 73 clamp (sandwich) a flange part of the helicopter hoisting platform 8 in-between. The flange part of the helicopter hoisting platform comprises a through-hole that is larger than the stud 73. The studs 73 are crossing through the holes in the flange part of the girder frame which are provided with a wider hole size for horizontal adjustment, whereas the thread on the studs 73 provides vertical adjustment.

This configuration also allows the manufacturing tolerances being compensated and the helicopter hoisting platform 8 being leveled independently of the nacelle roof 7.

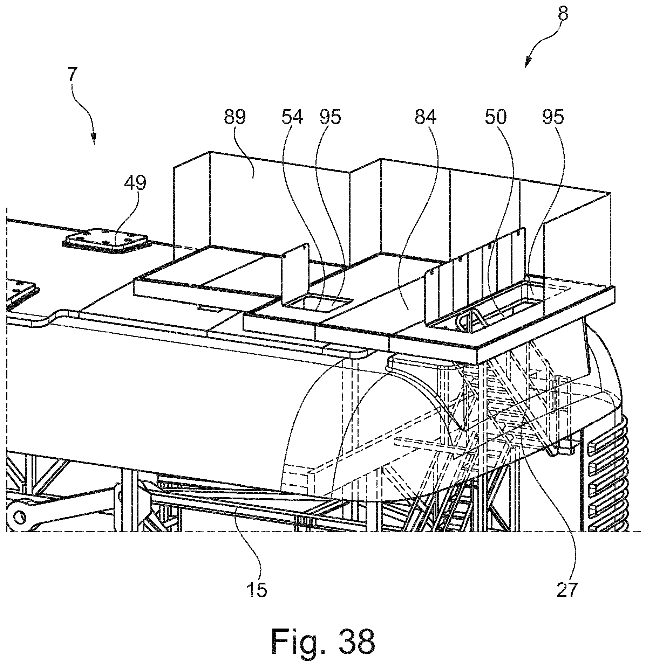

FIG 38 shows a simplified perspective view of the first embodiment of the helicopter hoisting platform.

Some elements of the nacelle cover 6 and the railing fence 89 are hidden in this figure to provide a view into the rear part of the nacelle.

Whereas the first embodiment comprises lateral access hatches 50 for vertical ladders, the second embodiment comprises a rectangular centered access hatch for a 45° stairway 27.

Hatch adapter are configured to level the hatch covers 50, 54 with the walkable surface of the winching area 84.

The hatches are opened outward and rotated about the transversal direction Y towards the rotor 3. This arrangement provides for a minimal windage area exposed to the downwash of a helicopter hovering over the helicopter hoisting platform 8.

When closed, the hatches 50, 54 provide a walkable surface with anti-skid properties. Further, the hatch covers form an obstacle-free flat surface that is flush with the surrounding walkable area.

The respective hatch covers hermetically seal the corresponding hatches 50, 54 when closed.

Approximate hatch size of the access hatch 50 is 305 cm x 85 cm.

The access hatch 50 is equipped with hinges, gas springs, locking devices and a sealing rubber (elastomeric) element.

The hatches 50, 54 can be hold locked in the open position by a locking mechanism.

At least the access hatch 50 (but preferably most or all hatches 50, 54, 49) can be operated from the inside and the outside.

An upraised hatch adapter 95 levels the hatch covers 50, 54 with the surrounding walkable surface. Preferably, the hatch covers 50, 54 are yellow.

The approximate size of the support hatch is larger than 50 cm x 50 cm and smaller than 2 m x 2 m. In particular, the approximate size of the support hatch 54 is 75 cm x 75 cm. The support hatch 54 is equipped with hinges, gas springs, locking devices and sealing rubber (elastomeric) element.

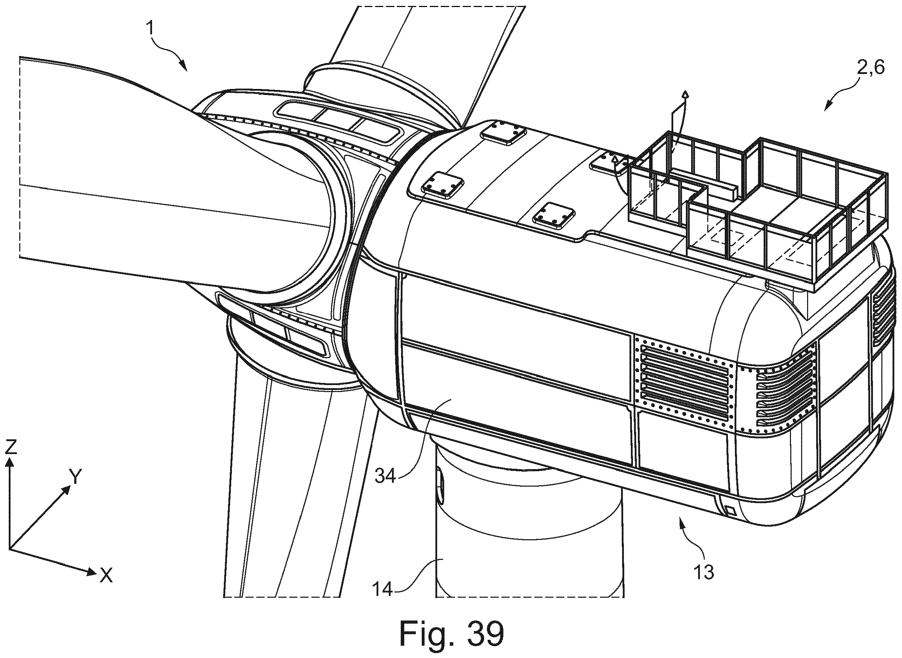

FIG. 39 shows a simplified perspective view of a wind driven power plant 1. The wind driven power plant 1 comprises a nacelle 2. The nacelle extends in a vertical direction Z, which is substantially parallel to the axial extension of a supporting structure, in particular a tower 14 on which the nacelle 2 can be mounted. The nacelle 2 also extends in a horizontal plane defined by a longitudinal direction X, which is substantially parallel to a drive train to be located in the nacelle, and a transversal direction Y. The longitudinal direction X and the transversal direction Y are both perpendicular to the vertical direction Z and to each other.

The nacelle 2 comprises a nacelle cover 6, which can also be considered an envelope (outer shell) of the nacelle. A portion of the nacelle cover 6 is formed by a nacelle bottom cover 13, 413.

The nacelle cover 6 is coupled to a support frame 15. More particularly, lateral side walls 9, 10 of the nacelle cover 6 are coupled to the outer support frame 20. A nacelle roof 7 and the nacelle bottom cover 13 may also be coupled to the support frame 15. Thereby, the nacelle cover is directly or indirectly laterally supported by the support frame 15.

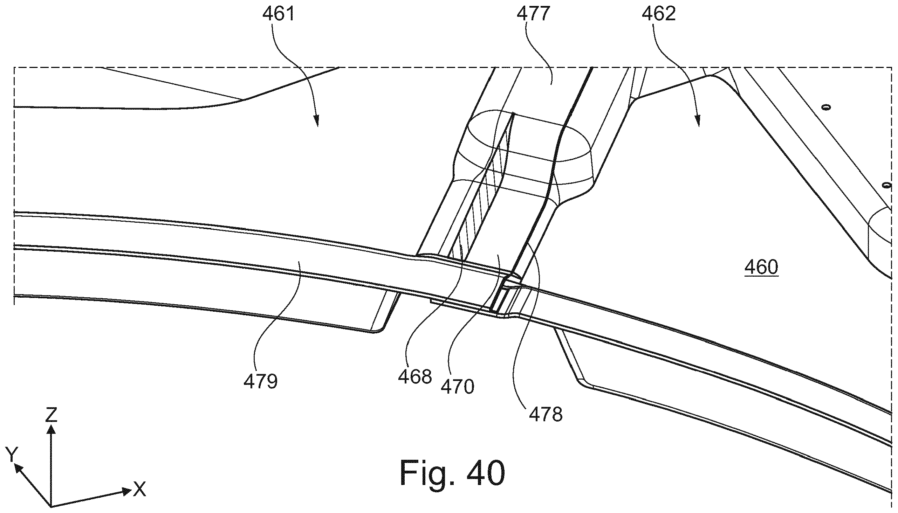

FIG. 40 shows a simplified perspective view of two segments 461, 462 of the nacelle bottom cover 413, a first segment 461 and a second segment 462. The depicted nacelle bottom cover 413 comprises more than two segments 461, 462, however.

Each of the segments 461-467 is configured to contain a predefined maximum volume of a leaking liquid 460 in a corresponding receptacle (the same reference numbers generally refer to the segments and the corresponding receptacles, unless stated otherwise). The respective receptacles are configured to collectively contain a total volume that corresponds to a total amount of liquids in the wind driven power plant. Advantageously, the receptacles are configured to even contain the total volume, if the nacelle 2 is in a slightly tilted position (approximately +/- 2°), e. g. because of constructional tolerances or wind load.

The first segment 461 is arranged adjacent to the second segment 462.

The first segment 461 and the second segment 462 are conditionally coupled by a (first) channel 468 that is configured to distribute the leaking liquid 460 from the first segment 461 to the second segment 462, in case the amount of leaking liquid in the first segment 461 exceeds the predefined volume of the first segment 461.

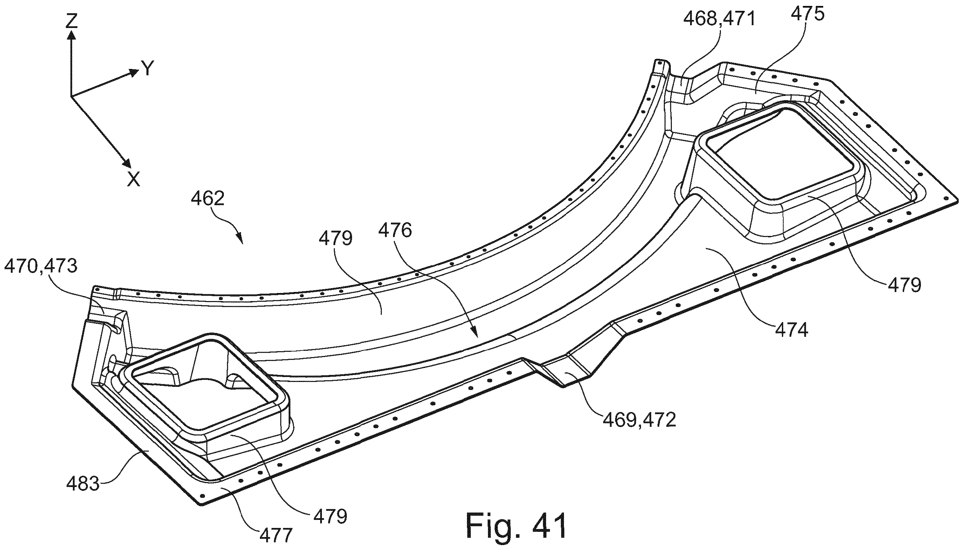

FIG. 41 shows a simplified perspective view of the second segment 462 (or rather a panel of the nacelle bottom cover that comprises the second segment 462) without any liquids. The segments 461-467 each comprise a lower surface 474 and a circumferential upraised surface 475 that surrounds the lower surface 474. The lower surface 474 and the circumferential upraised surface 475 cooperatively form the receptacle 476.

The circumferential upraised surface 475 is configured to provide additional structural stiffness to the segments.

A section of the circumferential upraised surface 475 forms the channel 468 470. A bottom 471-473 of the channel has a lower altitude (vertical height in direction of the Z axis) than the remainder of the circumferential upraised surface 475. The altitude (vertical height) of the bottom 471-473 of the channel 468-470 defines a maximum fill-level of the receptacle 476.

As the panels of this embodiment comprise exactly one corresponding segment each, the same reference numbers are used to refer to the segments 461-467 and the respective panels 461-467. However, a panel can alternatively comprise more than one segment (embodiment not shown).

Each composite panel is manufactured as a wide span self-support composite panel. The panel can be configured as a typical sandwich lamination. In this case, each panel comprises top and bottom fiberglass layers and can optionally comprise a middle foam core. If such a core is implemented, this enhances the stability of the panel.

Resin infusion is utilized during the lamination process. In a one-shot resin infusion process, the resin is distributed in a uniform manner across the layup. Subsequently, bonding the complete layup in one manufacturing step is possible.

A vacuum infusion process (VIP) or a light resin transfer moulding (light RTM) process can be used to manufacture the segments/panels.

Panels 461-467 with segments 461-467 comprise a flange 477 to form an overlapping flange connection with at least one adjacent panel. The respective circumferential upraised surface 475 of the panel 461-67 forms at least a part of the respective flange 477.

Each of the flanges 477 is integral to one of the panels. The flanges 477 advantageously extend in the same plane as the panel to which it belongs or at least in substantially the same plane as the region of the panel adjacent to the flange. In other words, the respective flange 477 extends essentially straightly (not bent or curved) from the adjacent region of the panel in at least one direction.

The panels are configured such that a flange gap 478 between two overlapping flanges 477 of a flange connection is generally positioned above maximum fill-levels of one or more receptacles 461-467 adjacent to the (intermediate) flange connection.

The flange gap 478 is sealed by a seal/gasket. In the area of the channels, the flange gap is further sealed with a sealing compound that is substantially inert to the liquids in the wind driven power generator 1. The sealing compound protects the gasket in the flange gap 478 from potentially aggressive leaked liquids, in case the flange gap of the channel bottom 471-473 becomes submerged.

The panels can be made of a composite, i.e. a glass fiber reinforced polymer (GFRP).

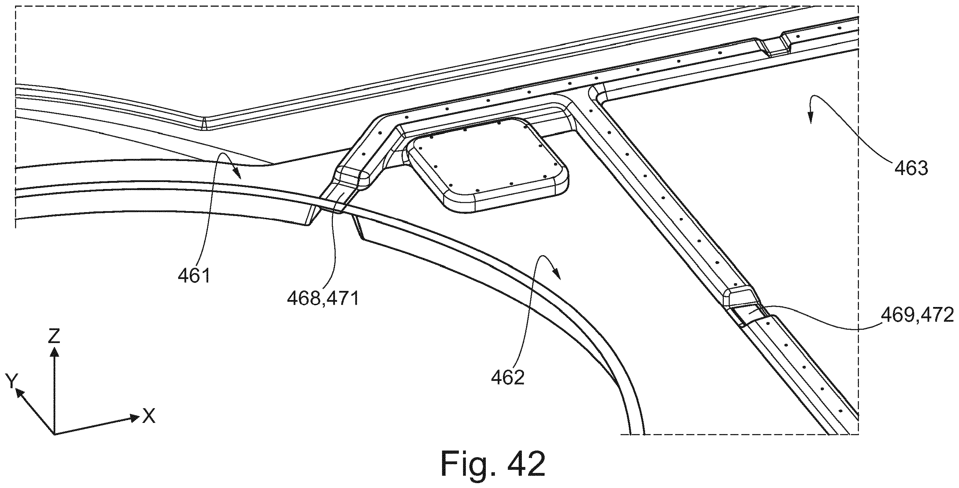

FIG. 42 shows a simplified perspective view of the nacelle bottom cover 413 comprising a third segment 463. At least the second segment 462 comprises a first channel 468 and a second channel 469. The first channel 468 is coupled to the first segment 461. The second channel 469 is coupled to the third segment 63. The channel bottom 472 of the second channel 462 can have a lower (alternatively: higher or same) vertical height (altitude) than the channel bottom 471 of the first channel 461. All channel bottoms 471-473 of a segment 461-467 can have the same or different vertical heights. The vertical heights, the area/position of the leakage in the nacelle 2 and the volume of the leaking liquid 460 determine the sequence of filling of the receptacles 461-467.

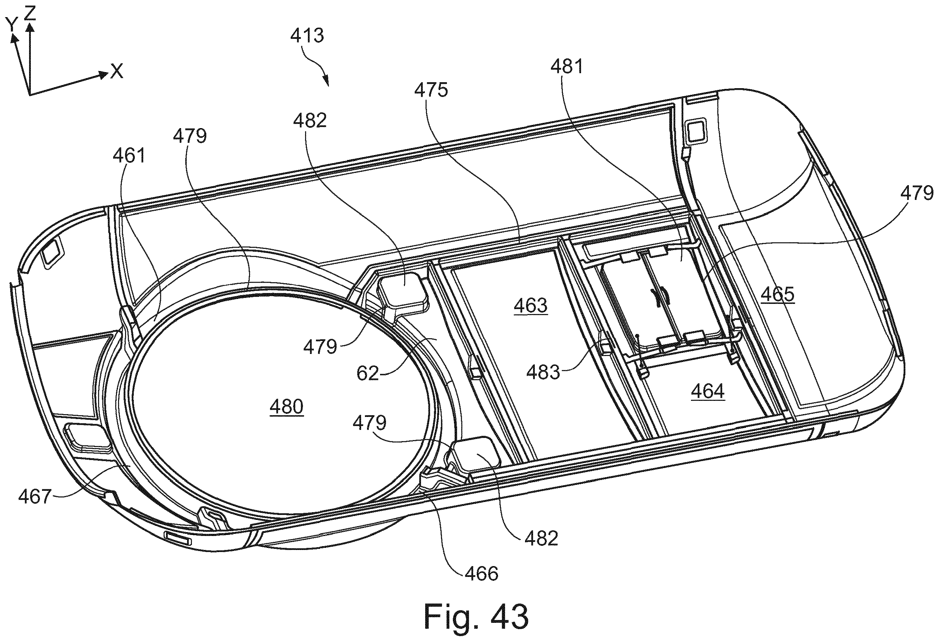

FIG. 43 shows a simplified perspective view of the nacelle bottom cover 413 of the nacelle 2. A plurality of panels 461-467 forms the nacelle bottom cover 413.

Adjacent segments 461-467 are coupled by channels such that they are consecutively filled one after the other with the leaking liquid 460.

One or more of the panels 461-467 form a raised collar 479 that surrounds an opening in the nacelle bottom cover 413. In particular, the opening can be a tower opening 480 or a hatch opening 481, 482. The raised collar rises above the maximum fill-level of the receptacles.

The liquid retaining segments (or rather the panels comprising the segments) are manufactured as one-shot composite reinforced laminates.

Advantageously, some or all segments (or rather the panels comprising the segments) can have a sandwich structure. The sandwich structure comprises a fiber reinforced top layer, a fiber reinforced bottom layer and an intermediate foam core.

Flange regions and/or collar regions of the segments/panels comprise a single skin laminate.

In other words: The composite layup of the panels varies between sandwich and single skin areas, wherein the larger surface is reinforced with core foam, and the upraised and overlap flanges are a single skin lamination without foam core.

The nacelle bottom cover 413 is configured to be removable and detachable at least in a center section such that parts of the drive train can be lowered down and outside the nacelle. As such, the panels 463 and 464 can be designed as a sealed removable and detachable lid.

The term "detachable" in this context should be understood to describe panels 63, 64 that can be fully detached from the remaining part (e.g. the outer bottom cover panels 461, 465, 466 and 467) of the nacelle 2 in an easy and convenient way. As such, removable and detachable panels 463, 464 are configured to be physically lifted away from the nacelle 2, e.g. by a lifter or crane, or by a helicopter and placed at ground level, e.g. on a jack-up barge. Sliding or revolving panels or roof sections which are not conceived to be easily and conveniently fully detachable from the nacelle 2 are therefore not considered to be removable and detachable within the meaning of this description.

In other words, a detachable connection is designed for repeated engagement and disconnection. The detachable connection is not constructed for single-time and/or permanent (or at least long lasting) engagement.

A permanent connection, on the other hand, is designed for single-time and/or permanent (or at least long lasting) engagement. Stated differently, the permanent connection is not constructed for a recurring engagement and disconnection.

For example, a welded connection is obviously considered to be a permanent connection.

A screwed connection, however, can be considered to form a detachable connection as well as a permanent connection, depending on the configuration of the screwed connection and the intended purpose.

A screwed connection comprising a castle nut secured by a safety cotter pin, for example, may be designed for easy and convenient detachment (and reattachment). The same applies to a screwed connection comprising a low- strength liquid bolt retaining compound (such as "Loctite 221", "Loctite 222" or comparable), which may be reapplied after every detachment.

A screwed connection comprising a medium-strength liquid bolt retaining compound (such as "Loctite 243" or comparable) or a high-strength liquid bolt retaining compound (such as "Loctite 270", "Loctite 276" or comparable), however, forms a permanent connection, even if such a connection can still be detached, for example by using solvents, a heat treatment, or special tools. The nacelle bottom cover 413 further comprises two smaller hatches 482 in the inner bottom cover panel 462 next to the tower opening 480.

The segments 462, 464 comprising the hatches 482, 481 have a raised collar 479 around the hatch openings. As the panels are manufactured comprising a composite laminate, several further considerations regarding the manufacture of the flange connections have to be made.

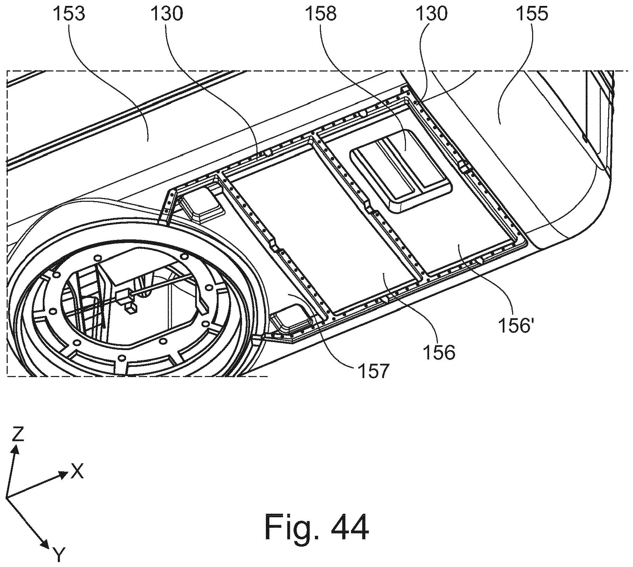

FIG. 44 shows a simplified perspective bottom view of a nacelle bottom having detachable inner bottom cover panels 156. The bottom cover of the nacelle 2 comprises outer lateral bottom panels 153, 136, an outer rear bottom panel 155, 136, detachable inner bottom panels 156, 133 and a fixed inner bottom panel 157, 133. An inner bottom panel 156' comprises a bottom hatch158 for hoisting supplies from/to the nacelle 2. The bottom hatch 158 comprises double wing doors, which are supported by gas springs and open in an inward direction.

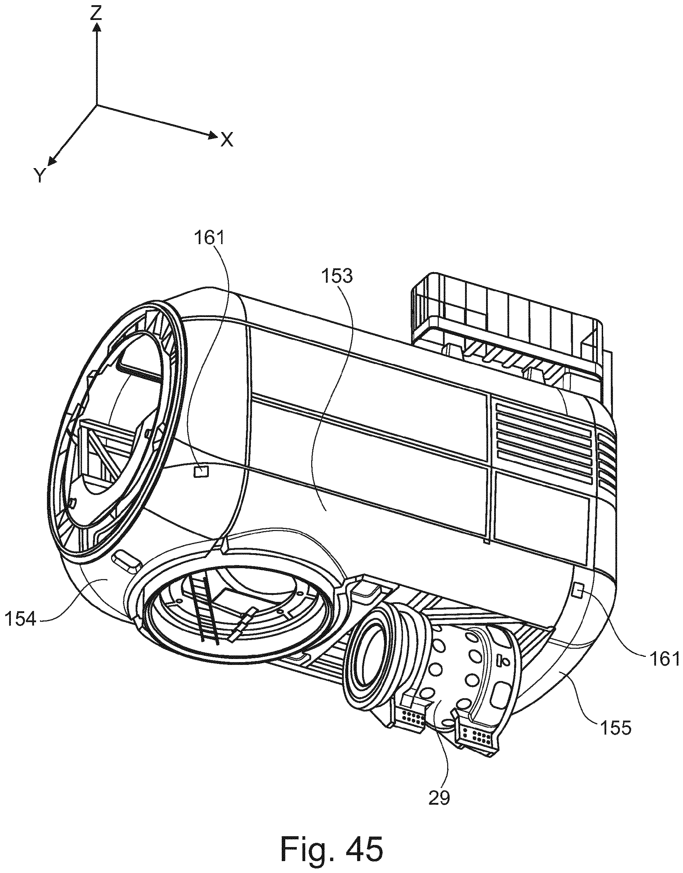

FIG 45 shows a simplified perspective bottom view of a nacelle bottom having the inner bottom cover panels 156 removed in order to winch up/down a main shaft assembly 429 of the wind turbine 1. Depending on the size of the winched component, it may be necessary to temporarily remove detachable trusses 16" of the inner support frame 419, to allow the winched component 429 being allowed to pass through the bottom/lower passageway.

The outer front/rear bottom panels 154, 155 comprise extension arm hatches 161, which can be removed for extending extension arms (not shown) through the extension arm hatches.

According to the embodiments, a nacelle for a wind turbine having a nacelle cover is provided. The nacelle cover comprises a plurality of panels made of a composite. The panels may form substantially the entire cover of the nacelle. The panels can comprise flanges, and the flanges can be coupled via flange connections. The flange connections may be configured as several different types of flange connections, for example a first type, a second type, a third type and/or a fourth type (as described herein). The flange connections can advantageously be planar flange connections. The flange connections can comprise metal bars arranged adjacent to and along the flanges of the flange connections. The metal bars can be configured to reinforce the flange connection, and to form a Faraday cage surrounding internal components of the nacelle, such that the internal components are protected from lightning. At least a majority of the flange connections can be planar flange connections. The planar flange connections can be configured in an overlapping high-point drainage arrangement.

In an embodiment, the nacelle cover can comprise at least a first type of flange connection and a second type of flange connection. The first type of flange connection can be located on a lateral wall of the nacelle and the second type can be located on a roof of the nacelle. The first type can differ from the second type. For example, the first type can comprise rivet nuts and the second type can comprise clinch bolts.

The second type of flange connection can be used in locations on the roof of the nacelle, i.e. in a greater altitude than the first type of flange connection.

In an embodiment, there may be a third type of flange connections. The third type of flange connection may be located in the bottom area (for bottom panels) of the nacelle cover. The third type may be different from the first type. The third type may, for example comprise a drip edge. The third type may also differ from the second type by the drip edge. The third type may also differ from the first and/or second type in that it is located in an indentation (recessed) with respect to the surrounding and connected panels. In other words, the third type of flange connection has greater altitude than the surface of the surrounding panels outside the flange connection.

Although the invention has been described hereinabove with reference to specific embodiments, it is not limited to these embodiments but defined by the appended claims.

## Claims

1. A nacelle (2) for a wind turbine (1) having a nacelle cover (6), wherein the nacelle cover (6) comprises a plurality of panels (34) made of a composite, wherein the panels (34) comprise flanges (37), and the flanges (37) are coupled via flange connections (110, 120, 130),
a) wherein the flange connections (110, 120, 130, 140) comprise metal bars (235) arranged adjacent to and along the flanges (37) of the flange connections (110, 120, 130, 140), wherein the metal bars (235) are configured to i) reinforce the flange connection (110, 120, 130, 140), and ii) provide a Faraday cage surrounding internal components of the nacelle (2), such that the internal components are protected from lightning; and
b) wherein at least a majority of the flange connections (110, 120, 130, 140) are planar flange connections, and wherein the planar flange connections are configured in an overlapping high-point drainage arrangement,
wherein the nacelle cover (6) comprises at least a first type of flange connection (110) and a second type of flange connection (120), wherein the first type of flange connection (110) is located on a lateral wall (9, 10) of the nacelle (2) and the second type (120) is located on a roof (7) of the nacelle (2) and the first type (110) differs from the second type (120) in that the first type (110) comprises rivet nuts (240') that are riveted to the metal bars (235) and the second type (120) comprises clinch bolts (239') that are pressed into the metal bars (235').

2. The nacelle (2) of claim 1, wherein the multifunctional nacelle roof (7) comprises a plurality of panels (34) made of a composite, wherein and the panels (34) are connected to each other by means of connection flanges (37, 237), wherein the panels (34) are configurable to provide openings of different sizes to the nacelle (2) by detaching and removing one or more inner roof panels (47).

3. The nacelle (2) of claim 2, wherein the inner roof panels (47) are configurable to provide a first opening having a first size suitable for inserting/removing a complete drive train (31) of the wind driven power plant (1) and a second opening having a second size suitable for inserting/removing a generator (30) of the wind driven power plant (1).

4. The nacelle (2) of claim 3, wherein a predefined first plurality of inner roof panels (61-66) is configured to be detached from remaining parts (43-45) of the nacelle roof (7) to provide the first opening.

5. The nacelle (2) of claim 4, wherein a predefined second plurality of inner roof panels (64-66) is configured to be detached from remaining parts of the nacelle roof (7) to provide the second opening, and wherein the second plurality is arranged in a rear region of the nacelle roof (7).

6. The nacelle (2) of claim 5, wherein the first plurality of inner roof panels (61-66) comprises the second plurality of inner roof panels (64-66).

7. The nacelle (2) of anyone of claims 2 to 6, wherein a panel (54) comprises an access hatch (50) configured for maintenance personnel to enter/exit the nacelle (2) through the access hatch (50).

8. The nacelle (2) of anyone of claims 2 to 7, wherein a panel (47) comprises a supply hatch (54) configured for lifting in/hauling out supplies and tools for maintenance and installation work.

9. The nacelle (2) of anyone of claims 2 to 8, wherein roof panels (61, 63) comprise or form lifting hatches (49) configured for providing a passageway for lifting gear to be connected to an inner support frame of the nacelle (2).

10. The nacelle (2) of anyone of claims 2 to 9, wherein roof panels (45, 64, 65) comprise supports (52) for supporting a helicopter hoisting platform (8).

11. The nacelle (2) of anyone of claims 2 to 10, wherein the detachable inner roof panels (61-67) form respective opening covers (369) corresponding to the different openings, and wherein lifting eyes (379) are arranged in a region adjacent to the connection flanges of the respective opening covers (369).

12. The nacelle (2) of anyone of claims 2 to 11, wherein the detachable inner roof panels (61-67) form respective opening covers (369) corresponding to the different openings, and wherein anchor points (380) are arranged in a central region of the respective opening covers (369).

13. A wind driven power plant (1) comprising the nacelle (2) of anyone of the preceding claims.

14. A wind park comprising a plurality of wind driven power plants (1) of claim 13.

## Patentansprüche

1. Gondel (2) für eine Windturbine (1), die eine Gondelabdeckung (6) aufweist, wobei die Gondelabdeckung (6) mehrere aus einem Verbundmaterial gefertigte Platten (34) umfasst, wobei die Platten (34) Flansche (37) umfassen und die Flansche (37) über Flanschverbindungen (110, 120, 130) gekoppelt sind,
a) wobei die Flanschverbindungen (110, 120, 130, 140) Metallstangen (235) umfassen, die angrenzend an und entlang der Flansche (37) der Flanschverbindungen (110, 120, 130, 140) angeordnet sind, wobei die Metallstangen (235) ausgelegt sind zum i) Verstärken der Flanschverbindung (110, 120, 130, 140) und ii) Bereitstellen eines Faradayschen Käfigs, der die internen Komponenten der Gondel (2) umgibt, sodass die internen Komponenten vor Blitzen geschützt sind; und
b) wobei zumindest eine Mehrheit der Flanschverbindungen (110, 120, 130, 140) planare Flanschverbindungen sind und wobei die planaren Flanschverbindungen in einer überlappenden Anordnung mit Drainage an einem hohen Punkt ausgelegt sind,
wobei die Gondelabdeckung (6) zumindest einen ersten Typ von Flanschverbindung (110) und einen zweiten Typ von Flanschverbindung (120) umfasst, wobei der erste Typ von Flanschverbindung (110) an einer lateralen Wand (9, 10) der Gondel (2) befindlich ist und der zweite Typ (120) an einem Dach (7) der Gondel (2) befindlich ist und sich der erste Typ (110) vom zweiten Typ (120) dahingehend unterscheidet, dass der erste Typ (110) Einnietmuttern (240') umfasst, die auf die Metallstangen (235) genietet werden, und dass der zweite Typ (120) Klemmschrauben (239') umfasst, die in die Metallstangen (235') eingepresst werden.

2. Gondel (2) nach Anspruch 1, wobei das multifunktionale Gondeldach (7) mehrere aus einem Verbundmaterial gefertigte Platten (34) umfasst, wobei die Platten (34) mittels Verbindungsflanschen (37, 237) miteinander verbunden sind, wobei die Platten (34) dazu auslegbar sind, durch Lösen und Entfernen einer oder mehrerer innerer Dachplatten (47) Öffnungen unterschiedlicher Größen für die Gondel (2) bereitzustellen.

3. Gondel (2) nach Anspruch 2, wobei die inneren Dachplatten (47) auslegbar sind zum Bereitstellen einer ersten Öffnung, die eine erste Größe aufweist, die zum Einsetzen/Entfernen eines vollständigen Antriebsstrangs (31) der windgetriebenen Kraftanlage (1) geeignet ist, und einer zweiten Öffnung, die eine zweite Größe aufweist, die zum Einsetzen/Entfernen eines Generators (30) der windgetriebenen Kraftanlage (1) geeignet ist.

4. Gondel (2) nach Anspruch 3, wobei eine vordefinierte erste Vielzahl von inneren Dachplatten (61-66) dazu ausgelegt ist, von verbleibenden Teilen (43-45) des Gondeldachs (7) gelöst zu werden, um die erste Öffnung bereitzustellen.

5. Gondel (2) nach Anspruch 4, wobei eine vordefinierte zweite Vielzahl von inneren Dachplatten (64-66) dazu ausgelegt ist, von verbleibenden Teilen des Gondeldachs (7) gelöst zu werden, um die zweite Öffnung bereitzustellen, und wobei die zweite Vielzahl in einem hinteren Bereich des Gondeldachs (7) angeordnet ist.

6. Gondel (2) nach Anspruch 5, wobei die erste Vielzahl von inneren Dachplatten (61-66) die zweite Vielzahl von inneren Dachplatten (64-66) umfasst.

7. Gondel (2) nach einem der Ansprüche 2 bis 6, wobei eine Platte (54) eine Zugangsklappe (50) umfasst, die dazu ausgelegt ist, dass das Wartungspersonal die Gondel (2) durch die Zugangsklappe (50) betreten/verlassen kann.

8. Gondel (2) nach einem der Ansprüche 2 bis 7, wobei eine Platte (47) eine Zufuhrklappe (54) umfasst, die ausgelegt ist zum Anheben/Ausbringen von Zubehörmaterialien und Werkzeugen für Wartungs- und Installationsarbeiten.

9. Gondel (2) nach einem der Ansprüche 2 bis 8, wobei Dachplatten (61, 63) Anhebeklappen (49) umfassen oder bilden zum Bereitstellen eines Durchgangs zum Anheben von Geräten, die mit einem inneren Stützrahmen der Gondel (2) verbunden werden sollen.

10. Gondel (2) nach einem der Ansprüche 2 bis 9, wobei Dachplatten (45, 64, 65) Stützen (52) zum Tragen einer Hubschrauberanhebeplattform (8) umfassen.

11. Gondel (2) nach einem der Ansprüche 2 bis 10, wobei die lösbaren inneren Dachplatten (61-67) entsprechende Öffnungsabdeckungen (369) entsprechend den unterschiedlichen Öffnungen bilden, und wobei Anhebeösen (379) in einem Bereich angrenzend an die Verbindungsflansche der entsprechenden Öffnungsabdeckungen (369) angeordnet sind.

12. Gondel (2) nach einem der Ansprüche 2 bis 11, wobei die lösbaren inneren Dachplatten (61-67) entsprechende Öffnungsabdeckungen (369) entsprechend den unterschiedlichen Öffnungen bilden, und wobei Ankerpunkte (380) in einem zentralen Bereich der entsprechenden Öffnungsabdeckungen (369) angeordnet sind.

13. Windgetriebene Kraftanlage (1), umfassend die Gondel (2) nach einem der vorhergehenden Ansprüche.

14. Windpark, umfassend eine Vielzahl von windgetriebenen Kraftanlagen (1) nach Anspruch 13.

## Revendications

1. Nacelle (2) pour une éolienne (1) ayant un couvercle de nacelle (6), dans laquelle le couvercle de nacelle (6) comprend une pluralité de panneaux (34) faits d'un composite, dans laquelle les panneaux (34) comprennent des brides (37), et les brides (37) sont couplées via des raccords à bride (110, 120, 130),
a) dans laquelle les raccords à bride (110, 120, 130, 140) comprennent des barres métalliques (235) agencées à côté et le long des brides (37) des raccords à bride (110, 120, 130, 140), dans laquelle les barres métalliques (235) sont configurées pour i) renforcer le raccord à bride (110, 120, 130, 140), et ii) fournir une cage de Faraday entourant les composants internes de la nacelle (2), de sorte que les composants internes soient protégés de la foudre ; et
b) dans laquelle au moins la majorité des raccords à bride (110, 120, 130, 140) sont des raccords à bride planaires, et dans laquelle les raccords à bride planaires sont configurés dans un agencement de drainage en point haut de chevauchement,
dans laquelle le couvercle de nacelle (6) comprend au moins un premier type de raccord à bride (110) et un deuxième type de raccord à bride (120), dans laquelle le premier type de raccord à bride (110) est situé sur une paroi latérale (9, 10) de la nacelle (2) et le deuxième type (120) est situé sur un toit (7) de la nacelle (2) et le premier type (110) diffère du deuxième type (120) en ce que le premier type (110) comprend des écrous à river (240) qui sont rivetés aux barres métalliques (235) et le deuxième type (120) comprend des boulons à sertir (239') qui sont pressées dans les barres métalliques (235').

2. Nacelle (2) selon la revendication 1, dans laquelle le toit de nacelle multifonctionnel (7) comprend une pluralité de panneaux (34) faits d'un composite, dans laquelle les panneaux (34) sont reliés entre eux au moyen de brides de raccordement (37, 237), dans laquelle les panneaux (34) sont configurables pour fournir des ouvertures de différentes tailles à la nacelle (2) en détachant et en retirant un ou plusieurs panneaux de toit intérieurs (47).

3. Nacelle (2) selon la revendication 2, dans laquelle les panneaux de toit intérieurs (47) sont configurables pour fournir une première ouverture ayant une première taille appropriée pour insérer/retirer une chaîne dynamique complète (31) de la centrale électrique à énergie éolienne (1) et une deuxième ouverture ayant une deuxième taille appropriée pour insérer/retirer un générateur (30) de la centrale électrique à énergie éolienne (1).

4. Nacelle (2) selon la revendication 3, dans laquelle une première pluralité prédéfinie de panneaux de toit intérieurs (61-66) est configurée pour être détachée des parties restantes (43-45) du toit de nacelle (7) pour fournir la première ouverture.

5. Nacelle (2) selon la revendication 4, dans laquelle une deuxième pluralité prédéfinie de panneaux de toit intérieurs (64-66) est configurée pour être détachée des parties restantes du toit de nacelle (7) pour fournir la deuxième ouverture, et dans laquelle la deuxième pluralité est agencée dans une région arrière du toit de nacelle (7).

6. Nacelle (2) selon la revendication 5, dans laquelle la première pluralité de panneaux de toit intérieurs (61-66) comprend la deuxième pluralité de panneaux de toit intérieurs (64-66).

7. Nacelle (2) selon l'une quelconque des revendications 2 à 6, dans laquelle un panneau (54) comprend une trappe d'accès (50) configurée pour que le personnel de maintenance puisse entrer/sortir de la nacelle (2) à travers la trappe d'accès (50).

8. Nacelle (2) selon l'une quelconque des revendications 2 à 7, dans laquelle un panneau (47) comprend une trappe d'alimentation (54) configurée pour l'introduction/l'extraction des fournitures et des outils pour les travaux de maintenance et d'installation.

9. Nacelle (2) selon l'une quelconque des revendications 2 à 8, dans laquelle les panneaux de toit (61, 63) comprennent ou forment des trappes de levage (49) configurées pour fournir un passage pour les engins de levage devant être reliés à un cadre de support intérieur de la nacelle (2).

10. Nacelle (2) selon l'une quelconque des revendications 2 à 9, dans laquelle les panneaux de toit (45, 64, 65) comprennent des supports (52) pour supporter une plate-forme d' hélitreuillage (8).

11. Nacelle (2) selon l'une quelconque des revendications 2 à 10, dans laquelle les panneaux de toit intérieurs amovibles (61-67) forment des couvercles d'ouverture respectifs (369) correspondant aux différentes ouvertures, et dans laquelle des œillets de levage (379) sont agencés dans une région adjacente aux brides de raccordement des couvercles d'ouverture respectifs (369) .

12. Nacelle (2) selon l'une quelconque des revendications 2 à 11, dans laquelle les panneaux de toit intérieurs amovibles (61-67) forment des couvercles d'ouverture respectifs (369) correspondant aux différentes ouvertures, et dans laquelle des points d'ancrage (380) sont agencés dans une région centrale des couvercles d'ouverture respectifs (369).

13. Centrale électrique à énergie éolienne (1) comprenant la nacelle (2) selon l'une quelconque des revendications précédentes.

14. Parc éolien comprenant une pluralité de centrales électriques à énergie éolienne (1) selon la revendication 13.
